(19) Europäisches Patentamt
European Patent Office
Office européen des brevets

(11) **EP 1 567 921 B1**

## (12) EUROPÄISCHE PATENTSCHRIFT

(45) Veröffentlichungstag und Bekanntmachung des Hinweises auf die Patenterteilung:
**12.11.2008 Patentblatt 2008/46**

(21) Anmeldenummer: **03788850.0**

(22) Anmeldetag: **04.12.2003**

(51) Int Cl.:
***G05B 19/418*** (2006.01)

(86) Internationale Anmeldenummer:
**PCT/DE2003/003989**

(87) Internationale Veröffentlichungsnummer:
**WO 2004/053606 (24.06.2004 Gazette 2004/26)**

(54) **VERFAHREN ZUM ERMITTELN EINER VERTEILUNG VON PHYSIKALISCHEN OBJEKTEN AUF ANLAGEN EINES ANLAGENSYSTEMS**

METHOD FOR DETERMINING A DISTRIBUTION OF PHYSICAL OBJECTS ON STATIONS OF A SYSTEM OF STATIONS

PROCEDE POUR DETERMINER UNE REPARTITION D'OBJETS PHYSIQUES SUR DES INSTALLATIONS D'UN SYSTEME D'INSTALLATIONS

(84) Benannte Vertragsstaaten:
**DE FR**

(30) Priorität: **06.12.2002 DE 10257200**

(43) Veröffentlichungstag der Anmeldung:
**31.08.2005 Patentblatt 2005/35**

(73) Patentinhaber: **Infineon Technologies AG**
**81669 München (DE)**

(72) Erfinder: **GOLD, Hermann**
**93059 Regensburg (DE)**

(74) Vertreter: **Viering, Jentschura & Partner**
**Postfach 22 14 43**
**80504 München (DE)**

(56) Entgegenhaltungen:
**US-A- 5 715 165**

- **MONCH L ET AL: "Simulation-based solution of load-balancing problems in the photolithography area of a semiconductor wafer fabrication facility" PROCEEDINGS OF THE 2001 WINTER SIMULATION CONFERENCE. WSC'01. ARLINGTON, VA, DEC. 9 - 12, 2001, WINTER SIMULATION CONFERENCE, NEW YORK, NY: IEEE, US, Bd. 1 OF 2. CONF. 34, 9. Dezember 2001 (2001-12-09), Seiten 1170-1177, XP010573668 ISBN: 0-7803-7307-3**

**Beschreibung**

Die Erfindung betrifft ein Verfahren zum Ermitteln einer Verteilung von physikalischen Objekten auf Anlagen eines Anlagensystems mit einer Mehrzahl von Anlagen, eine Vorrichtung, ein Computerlesbares Speichermedium und ein Computerprogramm

In der Industrie besteht ein fortgesetzter Bedarf, die Produktivität von Prozessen zu erhöhen und die Kosten zu verringern. Hierzu gehört insbesondere das Optimieren von Herstellungsprozessen.

Eine typische Halbleiterwafer-Fabrik ist zum Prozessieren unterschiedlicher Produkte eingerichtet. Das Herstellen eines Produkts kann Hunderte von Verarbeitungsschritten beinhalten (z.B. Photo-Lithographie, Resist-Entfernen, Ionenimplantation, Sputtern, CVD etc.). Hierbei kann auf einen Anlagentyp mehrere Male während des Herstellungs-Verfahrens zugegriffen werden. Das Erstellen eines Ablaufplans bezüglich der Verarbeitungsreihenfolge bzw. der Verteilung der zu verarbeitenden Wafer auf unterschiedliche Anlagen eines Anlagensystems zum Erhöhen der Produktivität ist ein komplexes Problem. Ein solcher Ablaufplan ist für die Liniensteuerung in der Halbleiter-Prozessierung erforderlich.

Ein Standardverfahren zur Liniensteuerung in der Halbleiterfertigung ist eine Verteilungsstrategie ("Dispatching Policy") mit der Bezeichnung "Critical/Ratio", auch "C/R" genannt. Gemäß diesem Verfahren werden Lose hinsichtlich der Reihenfolge ihrer Bearbeitung umso höher priorisiert, je höher die relative Verspätung und je kürzer die erwartete Restlaufzeit durch die Fertigungslinie ist.

Dieses Verfahren ist anschaulich auf die Optimierung der Leistungsgrößen Durchlaufzeit und Liefertreue gerichtet.

Allerdings weist dieses Verfahren Nachteile auf.

Ein Nachteil des Verfahrens besteht darin, dass diese Vorgehensweise an eine Verteilungsstrategie angelehnt ist, deren Optimalität nur für ein Einzel-Bediensystem mit mehreren Auftragsklassen und Rückkopplungen gegeben ist (sogenanntes Theorem von Klimov). Für ein allgemeines stochastisches Netzwerk ist das Optimierungsproblem EXPvollständig, weshalb auch für komplexe Netzwerke auf die einfache Verteilungsstrategie C/R zurückgegriffen wird. Allgemein ist die Problemklasse EXP dadurch gekennzeichnet, dass es einen Algorithmus gibt, der das Problem in einer exponentiellen Zeit löst.

Ein anderer Nachteil des Verfahrens besteht darin, dass für eine ganzheitliche Optimierung der Fertigungssteuerung die Zielgrößen, die im Theorem von Klimov berücksichtigt werden, nicht für alle Anwendungen ausreichend sind. Beispielsweise können Ausbeutemerkmale in der Praxis nicht auf Klimov's Zielgrößen abgebildet werden. Aus diesem Grund ist jedes Verfahren zur Optimierung einer Auswahl von Zielgrößen so zu gestalten, dass es mit Verfahren zum Optimieren von in dieser Auswahl nicht enthaltenen Zielgrößen kombiniert werden kann.

Das Problem der Liniensteuerung wird in der Halbleiter-Fertigung gemäß dem Stand der Technik auf der planerischen und auf der operationellen Ebene voneinander unabhängig gelöst.

Auf der planerischen Ebene wird die Möglichkeit der Einhaltung vorgegebener Kapazitätsgrenzen überprüft, indem die Arbeitsinhalte für die einzelnen Anlagen des Maschinenparks nach der Heuristik "unflexibelste Maschine/ unflexibelste Auftragsklasse zuerst" auf die Anlagen verteilt wird.

Eine alternative Verfahrensweise geht von folgender Abarbeitungsstrategie aus, die in einer zeitdiskreten Simulation realisiert ist: "Wähle unter den zur-Verfügung stehenden Auftragsklassen diejenige Auftragsklasse als nächstes zur Bearbeitung auf einer gerade frei gewordenen Anlage aus, für welche die gerade frei gewordene Anlage die höchste Geschwindigkeits-Einstufung hat. Hierbei ist die Geschwindigkeits-Einstufung eine Platzvergabe für die Anlagen im Hinblick auf jede einzelne Auftragsklasse. Die schnellste Anlage bzw. die schnellsten Anlagen für Auftragsklasse x erhält bzw. erhalten Einstufung 1 für Auftragsklasse x, die zweitschnellste bzw. die zweitschnellsten erhält bzw. erhalten Einstufung 2 für Auftragsklasse x, usw. für alle Anlagen und für alle Auftragsklassen".

Auf der operationellen Ebene werden für bestimmte Auftragsklassen weitere Anlagen freigegeben oder bestimmte Anlagen reserviert, wenn die rein technisch gegebene Auftragzu-Anlagen-Dezidierung zu tendenziell immer länger werdenden Durchlaufzeiten auf dem betroffenen Operationen führt.

[1] und [2] offenbaren das sogenannte MIVP-Verfahren ("Minimum Inventory Variability Policy") zum Verbessern der Liniensteuerung bei der Halbleiterprozessierung, wobei gemäß diesem Verfahren anschaulich bestimmte Regeln eingeführt werden, um ein Überschwemmen bzw. Aushungern von Anlagen eines Anlagensystems zu vermeiden.

In [3], [4] sind Verfahren der quadratischen Optimierung beschrieben.

In [5], [6] ist offenbart, wie für Polling-Zyklen relevante Besuchstafeln ("Visiting Tables") berechnet werden können. [7] offenbart ein Verfahren, mit dem feststellbar ist, wann das Beliefern eines Lastverbundes mit zu bearbeitenden Objekten eine Überlieferung bedeutet.

In [8] ist das heavy-traffic-Theorem von Kelly und Laws offenbart.

In [9] sind ein Verfahren und eine Vorrichtung offenbart, die eine Materialflussermittlung in einer Textilverärbeitungsanlage ohne physikalische Markierung von Materialeinheiten ermöglichen, bei der das Material von mehreren Verarbeitungsmaschinen verarbeitet wird und über Transportsysteme transportiert wird. Dies geschieht gemäß dem Verfahren mittels Speicherns von zeitlichen und örtlichen Angaben über Transportvorgänge und Wechsel von Materialeinheiten, die mittels Sensoren erfasst werden können, in einer oder mehrerer Dateien auf einem Rechner. Die Materialflussermittlung kann durch Verknüpfung der zeitlichen und örtlichen Angaben aus der Datei bzw..den Dateien durchgeführt werden.

Der Erfindung liegt das Problem zugrunde, ein Verfahren zum Ermitteln einer Verteilung von physikalischen Objekten auf Anlagen eines Anlagensystems zu schaffen, bei dem auch für komplexe Netzwerke von Anlagen eine verbesserte Leistungsfähigkeit bei der Liniensteuerung ermöglicht ist.

Das Problem wird durch ein Verfahren zum Ermitteln einer Verteilung von physikalischen Objekten auf Anlagen eines Anlagensystems mit einer Mehrzahl von Anlagen, durch eine Vorrichtung, durch ein Computerlesbares Speichermedium und durch ein Computerprogramm mit den Merkmalen gemäß den unabhängigen Patentansprüchen gelöst.

Gemäß dem erfindungsgemäßen Verfahren zum Ermitteln einer Verteilung von physikalischen Objekten auf Anlagen eines Anlagensystems mit einer Mehrzahl von Anlagen werden basierend auf einer jeweiligen Anlagenfunktionalität die Anlagen zu einer Mehrzahl von Anlagengruppen gruppiert. Ferner wird eine Mehrzahl von Lastverbunden gebildet, wobei ein jeweiliger Lastverbund zumindest einen Teil der Anlagen einer Anlagengruppe enthält Für die Lastverbunde wird eine Lastverteilung auf Basis einer Auslastungsminimierung und einer Auslastungshomogenisierung ermittelt. Gemäß der Lastverteilung sind die physikalischen Objekte auf die Anlagen der Lastverbunde zu verteilen, optional werden später die physikalischen Objekte auf die Anlagen der Lastverbunde verteilt.

Ferner ist eine Vorrichtung zum Ermitteln einer Verteilung von physikalischen Objekten auf Anlagen eines Anlagensystems mit einer Mehrzahl von Anlagen geschaffen, mit einem Prozessor, der derart eingerichtet ist, dass die oben genannten Verfahrensschritte durchführbar sind. Darüber hinaus ist ein Computerlesbares Speichermedium bereitgestellt, in dem ein Programm zum Ermitteln einer Verteilung von physikalischen Objekten auf Anlagen eines Anlagensystems mit einer Mehrzahl von Anlagen gespeichert ist, das, wenn es von einem Prozessor aufgeführt wird, die oben beschriebenen Verfahrensschritte aufweist. Ferner ist ein Computerprogramm zum Ermitteln einer Verteilung von physikalischen Objekten auf Anlagen eines Anlagensystems mit einer Mehrzahl von Anlagen geschaffen, das, wenn es von einem Prozessor ausgeführt wird, die oben beschriebenen Verfahrensschritte aufweist.

Die Erfindung kann sowohl mittels eines Computerprogramms, das heißt einer Software, als auch mittels einer oder mehrerer spezieller elektrischer Schaltungen, das heißt einer Hardware, oder in beliebig hybrider Form, das heißt mittels zusammenwirkender Software-Komponenten und Hardware-Komponenten, realisiert werden.

Bevor die Erfindung näher beschrieben wird, wird im Weiteren erläutert, wie eine Reihe von Begriffen im Rahmen dieser Beschreibung insbesondere verstanden werden.

Unter einem physikalischen Objekt wird insbesondere ein auf Anlagen eines Anlagensystems zu verteilender bzw. von diesen zu bearbeitender körperlicher Gegenstand, d.h. ein Objekt der realen Welt, insbesondere ein Objekt, welches einer Vielzahl von Bearbeitungsschritten oder Herstellungsschritten mittels der Anlagen unterzogen wird, bezeichnet, bezogen auf die Halbleiter-Fertigung z.B. ein Wafer-Los oder ein einzelner Wafer.

Unter Anlagen werden insbesondere Vorrichtungen verstanden, von denen jede zum Durchführen mindestens eines Prozessierungs-Schritts während einer Bearbeitung eines physikalischen Objekts eingerichtet ist. Bezogen auf den Bereich der Halbleiter-Fertigung können die Anlagen z.B. zum Durchführen folgender Bearbeitungs-Schritte eingerichtet sein:

- Verfahren zum Erzeugen von Schichten (beispielsweise Verfahren zum Abscheiden aus der Gasphase, CVD-Verfahren, thermische Oxidation, Aufdampfverfahren, Sputterverfahren, Verfahren zur Schleuderbeschichtung, Schichterzeugung mittels Ionenimplantation, Schichterzeugung mittels Wafer-Bonding und Rückätzen, Temper-Verfahren etc),

- Lithographieverfahren (beispielsweise Schritte zum Ausbilden von Photoresist-Strukturen, optische Belichtungs-Verfahren, Röntgenlithographie-Verfahren, Ionenlithographie-Verfahren etc.),

- Verfahren zum Entfernen von Schichten (beispielsweise Nassätzen, nasschemisches Ätzen, Chemisch-Mechanisches Polieren, Trockenätzen, Physikalisches Trockenätzen, Chemisches Trockenätzen, Chemisch-Physikalisches Trockenätzen, etc.),

- Dotieren einer Schicht mittels Dotieratomen (beispielsweise thermische Dotierung, Dotierung mittels Ionenimplantation, Aktivierung und Diffusion von Dotieratomen, Diffusion von Dotieratomen, Diffusion von nichtdotierten Stoffen etc.),

- Reinigungsschritte.

Unter einer.Anlagengruppe wird eine Gruppe von Anlagen eines Anlagensystems verstanden, die auf Basis eines vorgebbaren Kriteriums (oder mehrerer Kriterien) aus einer Mehrzahl von Anlagen gebildet wird. Ein Kriterium für das Bilden von Anlagengruppen ist die jeweilige Anlagenfunktionalität (beispielsweise die Fähigkeit der Anlagen einer Anlagengruppe, einen bestimmten Ätz-Verfahrensschritt durchzuführen bzw. einen bestimmten Ätz-Verfahrensschritt mit bestimmten Ätz-Parametern durchzuführen). Eine Anlagengruppe kann insbesondere eine abgeschlossene Anlagengruppe sein, anschaulich können die Anlagen einer Anlagengruppe eine austauschbare Funktionalität aufweisen.

Unter einem Lastverbund ("Resource Pool") wird insbesondere eine echte oder unechte Teilmenge der Anlagen einer abgeschlossenen Anlagengruppe verstanden. Somit kann ein Lastverbund aus disjunkten Untermengen einer abgeschlossenen Anlagengruppe bestehen. Ein Lastverbund wird basierend auf einer Analyse der Anlagengruppen gebildet, indem bestimmte Anlagen aus einer Anlagengruppe identifiziert werden. Somit ist ein Lastverbund eine Untermenge einer Anlagengruppe. Ein Lastverbund wird aus Anlagen einer Anlagengruppe derart gebildet, dass die Anlagen des Lastverbunds mittels Vorgebens der Verzweigungen zwischen den Anlagen im Wesentlichen homogen ausgelastet werden.

Eine Auftragsklasse repräsentiert insbesondere einen Teilschritt beim Herstellen eines Produkts aus einem in ein Anlagensystem einzuschleusenden physikalischen Objekt bzw. beim Bearbeiten eines physikalischen Objekts. Beispielsweise sind das Abscheiden, Ätzen, Ionenimplantieren unterschiedliche Auftragsklassen beim Herstellen eines entsprechenden Halbleiter-Produkts aus einem Wafer.

Eine Produktgruppe oder Auftragsart bezeichnet insbesondere ein spezielles herzustellendes Produkt (z.B. ein spezieller Speicherchip), das mittels Prozessierens eines physikalischen Objekts mittels mindestens einer Auftragsklasse hergestellt wird.

Unter einem Einschleusvektor (häufig mit λ bezeichnet) wird ein Vektor verstanden, dessen Komponenten die Information enthält, wie viele physikalische Objekte für eine der jeweiligen Vektorkomponente zugehörige Produktgruppe in das Anlagensystem eingeschleust werden soll.

Eine Grundidee der Erfindung ist darin zu sehen, basierend auf einer jeweiligen Anlagenfunktionalität (Beispielsweise die Fähigkeit einer Gruppe von Anlagen ein Ätz-Verfahren durchzuführen) das aus Anlagen gebildete Netzwerk eines Anlagensystems in Anlagengruppen (auch Zusammenhangs-Komponenten genannt) zu zerlegen, wobei vorzugsweise Anlagen unterschiedlicher Anlagengruppen unterschiedliche Anlagen sind. Mit anderen Worten gehört vorzugsweise eine jeweilige Anlage höchstens bzw. genau einer Anlagengruppe an. Ferner enthält dieses Dekomponieren das Bilden von Lastverbunden, das heißt vorzugsweise disjunkten Untermengen einer abgeschlossenen Anlagengruppe. Darüber hinaus wird die Verzweigung der Aufträge in den aus der Dekomposition hervorgegangenen Lastverbunden dadurch gesteuert bzw. eingestellt, dass für die Lastverbunde eine Lastverteilung auf Basis einer Auslastungsminimierung bzw. einer Auslastungshomogenisierung zwischen Anlagen ermittelt wird.

Anschaulich werden die physikalischen Objekte also derart auf die einzelnen Anlagen verteilt, dass die Gesamtlast nicht zu groß wird und dass eine möglichst gleichmäßige Verteilung der Lasten auf die Anlagen erfolgt, so dass ein Aushungern und ein Überschwemmen der Anlagen mit physikalischen Objekten vermieden ist. Basierend auf der so ermittelten Lastverteilung werden die physikalischen Objekte auf die Anlagen der Lastverbunde verteilt, das heißt die Aufträge verzweigt.

Dies ermöglicht eine besonders wirtschaftliche Prozessierung der physikalischen Objekte, z.B. der Wafer eines Wafer-Loses, auf den Anlagen, wodurch eine Prozessierung mit einer sehr hohen Produktivität ermöglicht ist.

Anschaulich kann dadurch die C/R-Regel so erweitert bzw. modifiziert werden, dass auch für komplexe Netzwerke von Anlagen eine gute Leistungsfähigkeit erzielt wird, insbesondere Kapazitätsverluste vermieden werden. Darüber hinaus wird die Last im Netzwerk homogen verteilt.

Das Problem der Bestimmung einer Auftrags-Reihenfolge bzw. des Verteilens von physikalischen Objekten auf Anlagen eines Anlagensystems wird somit mittels Erweiterns der konventionellen C/R-Regel um die Einführung von maximalen Beständen auf dem Niveau der Lastverbunde gelöst.

Erfindungsgemäß wird die Kapazität der Anlagen besser genutzt als bei aus dem Stand der Technik bekannten planerischen und operationellen Verfahren. Darüber hinaus wird eine homogenere Lastverteilung auf dem Anlagenpark erreicht. Mittels Auslastungsminimierens und Auslastungshomogenisierens werden Instabilitäten von Bediensystemen und Lastverbunden vermieden. Unvermeidbare Instabilitäten können besser erkannt werden, bevor es auf der operationellen Ebene dazu kommt, dass Warteschlangen für bestimmte Auftragsklassen tendenziell immer länger werden.

Aufgrund der Dekomposition der Anlagen zu Anlagengruppen ist ein erheblicher Geschwindigkeitsvorteil bei der Rechenzeit erreicht. Ferner ist eine leichte Parametrisierbarkeit gegeben, die es ermöglicht, Testszenarios in sehr kurzer Zeit aufbauen zu können und zu lösen.

Bevorzugte Weiterbildungen der Erfindung ergeben sich aus den abhängigen Ansprüchen.

Das Gruppieren der Anlagen zu der Mehrzahl von Anlagengruppen kann unter Berücksichtigung der Möglichkeiten der Zusammenhänge der Verteilung der physikalischen Objekte auf die Anlagen durchgeführt werden. Somit ist über die bloße Auftragslage hinaus ein zusätzliches Kriterium für das Steuern der Verteilung von physikalischen Objekten auf Anlagen geschaffen.

Das Gruppieren der Anlagen zu der Mehrzahl von Anlagengruppen erfolgt vorzugsweise unter Bilden einer transitiven Hülle der Anlagen bezüglich einer oder mehrerer Auftragsklassen, wobei eine Auftragsklasse einem Prozessabschnitt des Bearbeitens eines physikalischen Objekts entspricht.

Die Anlagengruppen werden vorzugsweise derart gebildet dass unterschiedliche Anlagengruppen disjunkt sind

Ferner können die Lastverbunde derart gebildet werden, dass mittels geeigneter Wahl von Verzweigungsgewichten zwischen den Anlagen des Lastverbunds die Anlagen im Wesentlichen homogen auslastbar sind. Somit ist die Verzweigung von Aufträgen bzw. das Verteilen von zu bearbeitenden physikalischen Objekten zwischen Anlagen des Lastverbunds ein wichtiger Freiheitsgrad bei der Optimierung des Gesamtsystems.

Ferner kann für die Lastverbunde eine Lastverteilung auf Basis einer Auslastungsminimierung und einer Auslastungshomogenisierung, das heißt auf Basis beider Kriterien, derart ermittelt werden, dass mittels einer Gewichtung die Priorisierung zwischen Auslastungsminimierung und Auslastungshomogenisierung vorgegeben wird. Anschaulich kann benutzerspezifisch und zugeschnitten auf die Bedürfnisse des Einzelfalls vorgegeben werden, wie stark die Kriterien der Auslastungsminimierung (d.h. die Bedeutung der Gesamtlast) und der Auslastungshomogenisierung (d.h. die Bedeutung der gleichmäßigen Verteilung der Last auf unterschiedliche Anlagen) zueinander gewichtet werden sollen.

Die Gewichtung kann insbesondere derart vorgegeben werden, dass die Auslastungshomogenisierung eine höhere Priorität erhält als die Auslastungsminimierung. Dies kann mittels Vorgebens von Parametern erfolgen, in deren Werten die Gewichtung zwischen den beiden Optimierungskriterien kodiert ist.

Bei dem Ermitteln der Lastverteilung können Verzweigungen zwischen Anlagen zum Verteilen der physikalischen Objekte auf die Anlagen ermittelt werden. Diese Verzweigungen können gewichtet werden, das heißt unterschiedliche Verzweigungen können unterschiedliche Verteilungsanteile aufweisen.

Das Ermitteln der Lastverteilung der Lastverbunde kann insbesondere unter Verwendung der Primal Dual Method for Convex Quadratic Programming, der Primal Affine Scaling Method for Convex Quadratic Programming oder der Active Set Method for Convex Quadratic Programming durchgeführt werden. Anschaulich kann die Optimierung unter Verwendung einer quadratischen Programmierung gemäß einem der genannten Verfahren der nichtlinearen Optimierung durchgeführt werden. Diese Verfahren der quadratischen Optimierung, die erfindungsgemäß verwendet werden können, finden sich zum Beispiel in [3].

Die physikalischen Objekte können gemäß der ermittelten Lastverteilung auf die Anlagen der Lastverbunde verteilt werden.

Die physikalischen Objekte können gemäß einer anderen Ausgestaltung der Erfindung auf einen nachgeschalteten Lastverbund unter Berücksichtigung mindestens eines dem nachgeschalteten Lastverbund vorgeschalteten Lastverbunds verteilt werden. Anschaulich erfolgt die Verarbeitung des Net zustandes in dem jeweils von einem Punkt einer Abarbeitungssteuerung stromabwärtsliegenden Lastverbund derart, dass die Abarbeitungs-Reihenfolge ("Sequencing") in Anlehnung an die C/R-Regel derart verändert wird, dass ein Überschwemmen oder Aushungern von Lastverbunden vermieden wird. Hierfür werden erfindungsgemäß mindestens ein vorgeschalteter Lastverbund mit mindestens.einem nachgeschalteten Lastverbund, zwischen welchen Lastverbunden eine Kopplung bzw. ein Wirkzusammenhang besteht, ganzheitlich betrachtet.

Insbesondere können die physikalischen Objekte auf dem nachgeschalteten Lastverbund unter Verwendung des Critical/Ratio-Kriteriums-verteilt werden.

Das Verteilen der physikalischen Objekte auf dem nachgeschalteten Lastverbund wird vorzugsweise unterbrochen, wenn die Anzahl der auf diesen Lastverbund verteilten physikalischen Objekte einen ersten Schwellenwert überschreitet. Anschaulich soll dadurch ein Überschwemmen eines Lastverbunds verhindert werden, wodurch die Bearbeitung eines Satzes von physikalischen Objekten negativ beeinflusst würde. Kann beispielsweise ein Puffer des Lastverbunds zusätzliche physikalische Objekte nicht mehr aufnehmen, so wird die Verteilung, d.h. das Nachliefern, von physikalischen Objekten auf diesem Lastverbund unterbrochen. Der vorgeschaltete Lastverbund kann dann physikalische Objekte z.B. auf andere Lastverbunde verteilen oder die Verteilung zunächst vollständig unterbrechen.

Das Verteilen der physikalischen Objekte auf einen nachgeschalteten Lastverbund wird vorzugsweise fortgesetzt, wenn die Anzahl der auf diesen Lastverbund verteilten physikalischen Objekte einen zweiten Schwellenwert unterschreitet. Mit dieser Maßnahme kann ein Aushungern eines Lastverbundes vermieden werden, insbesondere in einem Szenario, in dem nach dem Unterbrechen des Verteilens der physikalischen Objekte auf dem nachgeschalteten Lastverbund aufgrund Überschreitens des ersten Schwellenwerts der nachgeschaltete Lastverbund wieder Aufnahmekapazitäten hat.

Ferner kann die ermittelte Verteilung von physikalischen Objekten auf die Anlagen des Anlagensystems mittels einer Simulation, die vorzugsweise eine zu dem erfindungsgemäßen Verfahren komplementäre Funktionalität aufweist, verifiziert werden.

Hierfür können Ausgabe-Parameter des erfindungsgemäßen Verfahrens zum Verteilen der physikalischen Objekte als Eingabe-Parameter für eine Simulationssoftware verwendet werden, mittels welcher überprüft werden kann, ob die ermittelte Verteilung von physikalischen Objekten einer anwendungsnahen Simulation standhält. Beispielsweise kann das von der Firma Brooks Automation™ hergestellte Softwareprodukt ASAP™ (Autosched Accelerated Processing), das ein Simulationswerkzeug insbesondere für die Logistik von Halbleiterprozessen ist, hierfür verwendet werden. Damit können insbesondere die zu erwartenden Laufzeiten stimuliert werden. Unter Verwendung einer solchen Simulation kann die Zuverlässigkeit einer ermittelten Verteilung von physikalischen Objekten auf Anlagen eines Anlagensystems weiter erhöht werden.

Der Schritt des Verteilens der physikalischen Objekte auf die Anlagen des Anlagensystems kann den Schritt des Steuerns einer Reihenfolge eines Bearbeitens des physikalischen Objekts enthalten.

Ferner kann das Verteilen der physikalischen Objekte auf die Anlagen des Anlagensystems basierend auf einer Verarbeitungszeit der physikalischen Objekte erfolgen. Es ist eine wesentliche Eigenschaft des erfindungsgemäßen Verfahrens, die Verarbeitungszeit eines physikalischen Objekts, welches nacheinander eine Mehrzahl von Anlagen durchläuft, gering zu halten.

Das Anlagensystem ist vorzugsweise ein Halbleiterprozessierungs-Anlagensystem.

Das physikalische Objekt ist vorzugsweise ein Wafer oder ein Wafer-Los mit einer Mehrzahl von Wafern, insbesondere ein Siliziumwafer oder ein Siliziumwafer-Los.

Mit der Erfindung ist eine Einschleus-Kapazitäts-Überprüfung und eine verbesserte Liniensteuerung eines Halbleiter-Anlagensystems möglich. Ferner ist eine Erhöhung der Fertigungskapazität insbesondere in einem-Hochlast-Szenario ermöglicht.

Mittels der Erfindung wird ein EXP-vollständiges Problem mittels Dekomponierens in ein NP-vollständiges Problem umgewandelt, wobei das Optimierungspotential für die Auslastungsminimierung und Auslastungshomogenisierung beibehalten wird und dieses Potential unter Verwendung eines geeigneten Algorithmus in ausreichend kurzer Zeit umgesetzt wird. Die Problemklasse EXP ist dadurch gekennzeichnet, dass es einen Algorithmus gibt, der das Problem in exponentieller Zeit löst. Mit der Eigenschaft vollständig wird bezeichnet, dass, falls ein deterministischer Algorithmus auffindbar ist, nachweisbar wäre, dass die Problemklassen P und NP gleich sind..Als NP-vollständig kann ein Problem bezeichnet werden, wenn es einen nichtdeterministischen Algorithmus gibt, der das Problem in polynominieller Zeit löst.

Eine Idee der Erfindung kann auch darin gesehen werden, dass in der Linienfertigung für einen Halbleiter-Steuerungsprozess Sequencing von Rooting getrennt wird.

Die für das erfindungsgemäße Verfahren beschriebenen Ausgestaltungen gelten auch für die Vorrichtung, das Computerlesbare Speichermedium und das Computerprogramm.

Ausführungsbeispiele der Erfindung sind in den Figuren dargestellt und werden im Weiteren näher erläutert.

Es eigen:

Figur 1A          eine schematische Darstellung eines Anlagensystems gemäß der Erfindung,

Figur 1B          eine ausführlichere Darstellung eines anderen Anlagensystems gemäß der Erfindung;

figur 1C          ein Ablaufdiagramm, in dem Verfahrensschritte zum Ermitteln einer Verteilung von Wafern auf Anlagen des Anlagensystems aus Figur 1B gemäß einem bevorzugten Ausführungsbeispiel der Erfindung gezeigt sind,

Figur 1D          ein Ablaufdiagramm, in dem in dem in Figur 1B gezeigten Steuer-Rechner durchgeführte Verfahrensschritte zum Ermitteln einer Verteilung von Wafern auf Anlagen des Anlagensystems aus Figur 1B gemäß einem bevorzugten Ausführungsbeispiel der Erfindung gezeigt sind,

Figuren 2A, 2B       jeweils eine Vielzahl von aufeinanderfolgenden Auftragsklassen, wie sie während eines Halbleiterprozessierungs-Verfahrens gemäß zweier unterschiedlicher Auftragsarten abzuarbeiten sind,

Figur 3           eine Tabelle, entlang deren Zeilen Auftragsklassen und entlang deren Spalten Anlagen aufgetragen sind,

Figur 4           eine schematische Darstellung, welche die Einbettung einer Anlagengruppe in einem Netzwerk zeigt,

Figur 5           ein Diagramm, das die Auslastung unterschiedlicher Anlagen eines Anlagensystems zeigt,

Figur 6           ein schematisches Diagramm, das eine vorgeschaltete und eine nachgeschaltete Gruppe von Lastverbunden zeigt,

Figur 7           eine Darstellung, die Auftragsklassen, Anlagen und einen Ankunftsvektor bezüglich der Auftragsklassen gemäß einem bevorzugten Ausführungsbeispiel der Erfindung zeigt,

Figur 8           eine Darstellung einer Matrix der Bedienzeiten gemäß dem bevorzugten Ausführungsbeispiel der Erfindung,

Figur 9    eine Matrix der Verzweigungswahrscheinlichkeiten aus Sicht der Auftragsklassen, auf deren Basis der Pollingzyklus für Auftragsklassen berechnet wird,gemäß dem bevorzugten Ausführungsbeispiel der Erfindung,

Figur 10   eine Auslastungsmatrix und einen Auslastungsvektor gemäß dem bevorzugten Ausführungsbeispiel der Erfindung,

Figur 11   eine Matrix für die zu erzielenden Verzweigungen von Auftragsklassen aus Anlagensicht, auf deren Basis der Pollingzyklus für Anlagen berechnet wird, gemäß dem Ausführungsbeispiel der Erfindung.

Gleiche oder ähnliche Komponenten in unterschiedlichen Figuren sind mit gleichen Bezugsziffern versehen.

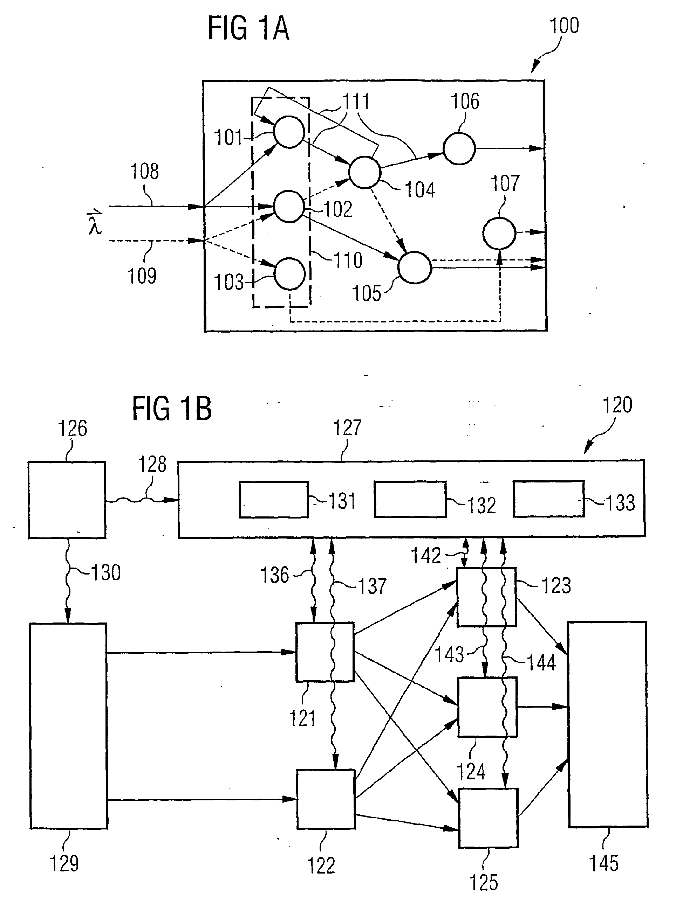

Im Weiteren wird bezugnehmend auf **Fig. 1A** ein schematisches Halbleiterprozessierungs-Anlagensystem 100, das erste bis siebte Anlagen 101 bis 107 enthält, beschrieben.

Jede der Anlagen 101 bis 107 ist zum Erfüllen einer bestimmten Funktionalität während des Prozessierens eines Halbleiter-Wafers eingerichtet, z.B. zum Durchführen folgender Bearbeitungs-Schritte:

- Verfahren zum Erzeugen von Schichten (beispielsweise Verfahren zum Abscheiden aus der Gasphase, CVD-Verfahren, thermische Oxidation, Aufdampfverfahren, Sputterverfahren, Verfahren zur Schleuderbeschichtung, Schichterzeugung mittels Ionenimplantation, Schichterzeugung mittels Wafer-Bonding und Rückätzen, Temper-Verfahren etc),

- Lithographieverfahren (beispielsweise Schritte zum Ausbilden von Photoresist-Strukturen, optische Belichtungs-Verfahren, Röntgenlithographie-Verfahren, Ionenlithographie-Verfahren etc.),

- Verfahren zum Entfernen von Schichten (beispielsweise Nassätzen, nasschemisches Ätzen, Chemisch-Mechanisches Polieren, Trockenätzen, Physikalisches Trockenätzen, Chemisches Trockenätzen, Chemisch-Physikalisches Trockenätzen, etc.),

- Dotieren einer Schicht mittels Dotieratomen, (beispielsweise thermische Dotierung, Dotierung mittels Ionenimplantation, Aktivierung und Diffusion von Dotieratomen, Diffusion von Dotieratomen, Diffusion von nichtdotierten Stoffen etc.),

- Reinigungsschritte.

Dem Halbleiterprozessierungs-Anlagensystem 100 werden zu prozessierende Wafer-Lose zugeführt.

Das Zuführen von Wafern in das Halbleicerprozessierungs-Anlagensystem 100 wird mittels eines Einschleus-Vektors $\lambda$ beschrieben. Gemäß dem gezeigten Ausführungsbeispiel werden Wafer einer ersten Auftragsart 108 und Wafer einer zweiten Auftragsart 109 in das Halbleiter-Prozessierungsanlagen-System 100 eingeschleust. Die Auftragsarten 108, 109 oder Produktgruppen entsprechen zwei unterschiedlichen Produkten, die mittels unterschiedlichen Prozessierens von Wafern unter Verwendung der Anlagen 101 bis 107 hergestellt werden. Die Komponenten des Vektors $\lambda$ enthalten Informationen über die Menge von Wafern, die gemäß einer jeweiligen Auftragsart 108 oder 109 in dem Halbleiterprozessierungs-Anlagensystem zu prozessieren sind. Beispielsweise werden entsprechend der Auftragsart 108 eine Menge von 500 Wafern pro Zeiteinheit (z.B. Tag oder Woche) prozessiert, gemäß der Auftragsart 109 beispielsweise 200 Wafer pro Zeiteinheit.

Das System aus Anlagen 101 bis 107 ist ein komplexes Netzwerk. Daher gibt es unterschiedliche Möglichkeiten für das Prozessieren der zugeführten Wafer unter Verwendung der Anlagen 101 bis 107. Unterschiedliche Prozessierungspfade sind mittels unterschiedlicher Verzweigungen 111 in **Fig.1A** eingezeichnet. Beispielsweise kann ein zugeführter Wafer der ersten Auftragsart 108 in einem ersten Prozessierungsschritt auf der ersten Anlage 101 oder auf der zweiten Anlage 102 prozessiert werden. Ein zugeführter Wafer der zweiten Auftragsart 109 kann beispielsweise auf der zweiten Anlage 102 oder auf der dritten Anlage 103 prozessiert werden. Entsprechend der einer jeweiligen Auftragsart zugeordneten Bearbeitungsschritte sind unterschiedliche Pfade entlang der Maschinen 101 bis 107 möglich. So kann zum Beispiel ein Wafer der zweiten Auftragsart 109 entweder nacheinander auf den Anlagen 102-104-105 prozessiert werden oder kann nacheinander auf den Anlagen 103-107 prozessiert werden.

Im Weiteren wird bezugnehmend auf **Fig.1B** ein anderes Halbleiterprozessierungs-Anlagensystem 120 gemäß der Erfindung beschrieben. Das Halbleiterprozessierungs-Anlagensystem 120 weist Anlagen zum Durchführen von nur zwei unterschiedlichen Prozessierungsschritten (Abscheiden und Ätzen) auf. In der Praxis...kann das. Herstellen eines Halbleiterprodukts eine wesentlich größere Anzahl von Teilschritten enthalten (typisch hundert), wobei in Fig.1B aus Gründen einer vereinfachten Erklärung ein System mit nur zwei Prozessierungsschritten dargestellt ist.

Das Halbleiterprozessierungs-Anlagensystem 120 weist fünf Anlagen 121 bis 125 auf, nämlich eine erste Abscheide-Anlage 121, eine zweite Abscheide-Anlage 122, eine erste Ätz-Anlage 123, eine zweite Ätz-Anlage 124 und eine dritte Ätz-Anlage 125. Die ersten und zweiten Abscheide-Anlagen 121, 122 sind zum Abscheiden einer Siliziumoxid-Schicht auf einen Halbleiter-Wafer eingerichtet. Die ersten bis dritten Ätz-Anlagen 123 to 125 sind zum Strukturieren z.B. einer mittels der ersten oder zweiten Abscheide-Anlage 121, 122 auf einen Wafer aufbringbaren Siliziumoxid-Schicht (unter Verwendung eines Lithographie- und eines Ätz-Verfahrens) eingerichtet.

Das Halbleiterprozessierungs-Anlagensystem 120 weist ferner eine Nachfrageübermittlungs-Einheit 126 auf, mittels welcher einem Steuer-Rechner 127 ein Steuer-Signal übermittelt werden kann, dass in dem Halbleiterprozessierungs-Anlagensystem 120 eine vorgegebene Anzahl von Halbleiterprodukten (z.B. entsprechend einer Bestellung eines Kunden) hergestellt werden soll. Derartige Steuer-Information ist dem Steuer-Rechner 127 von der Nachfrageübermittlungs-Einheit 126 über eine erste Kommunikationsverbindung 128 übermittelbar. Ferner ist die Nachfrageübermittlungs-Einheit 126 mit einem Wafer-Reservoir 129 (zum Bereitstellen bzw. Nachliefern von Wafer-Rohlingen) über eine zweite Kommunikationsverbindung 130 gekoppelt. Mittels eines Steuer-Signals kann die Nachfrageübermittlungs-Einheit 126 das Wafer-Reservoir 129 anweisen, zum Herstellen des Halbleiterprodukts Wafer in das System aus Anlagen 121 bis 125 einzuspeisen.

Der Steuer-Rechner 127 enthält eine Eingabe-/Ausgabe-Einheit 131 zum Kommunizieren mit angeschlossenen Komponenten des Halbleiterprozessierungs-Anlagensystem 120, einen Speicher 132 zum Speichern von Daten sowie eine CPU 133, in der ein Programm gespeichert ist, das zum Steuern des Halbleiterprozessierungs-Anlagensystems 120 erforderliche Verfahrensschritte durchführen kann. Die Berechnungen, die gemäß dem erfindungsgemäßen Verfahren zum Ermitteln einer Verteilung von Wafern auf die Anlagen 121 bis 125 erforderlich sind, werden von dem Steuer-Rechner 127, genauer gesagt von:seiner CPU 133, durchgeführt.

Die Steuerung des Halbleiterprozessierungs-Anlagensystems 120 mittels des Steuer-Rechners 127 erfolgt derart, dass eine Verteilung der einzuschleusenden Wafer des Wafer-Reservoirs 129 auf die Anlagen 121 bis 125 so vorgenommen wird, dass die Last auf den Anlagen 121 bis 125 minimiert und möglichst homogen auf die Anlagen 121 bis 125 verteilt wird.

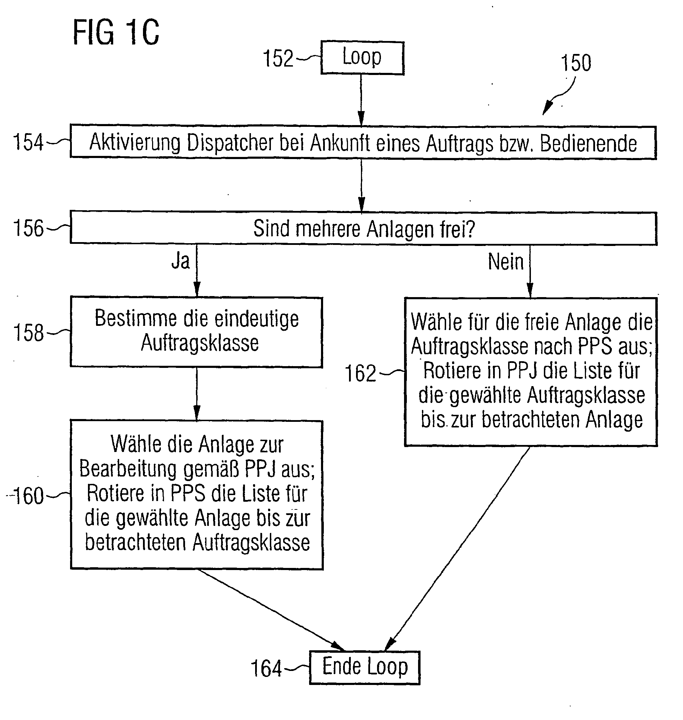

Das Wafer-Reservoir 129 kann infolge eines Steuer-Signals der Nachfrageübermittlungs-Einheit 126 der ersten und der zweiten Abscheide-Anlage 121, 122 eine vorgebbare Anzahl von Wafern zuführen. Ein Zuführen von Wafern zu der ersten bzw. zweiten Abscheide-Anlage 121, 122 erfolgt dann, wenn die jeweilige Abscheide-Anlage 121 bzw. 122 zu einem bestimmten Zeitpunkt eine Aufnahme von Wafern akzeptiert. Die Entscheidung einer in jeder der Anlagen 121, 122 enthaltenen Steuer-Einheit, ob die Anlage 121, 122 zu einem bestimmten Zeitpunkt Wafer von dem Wafer-Reservoir 129 aufnimmt oder nicht, entscheidet die jeweilige Steuer-Einheit, indem sie eine Polling-Abfrage von Daten in dem Steuer-Rechner 127 vornimmt (siehe Fig.1C). Eine solche Abfrage von einer Steuer-Einheit (mit einer internen Uhr) an den Steuer-Rechner 127 enthält das Abfragen von in dem Steuer-Rechner 127 enthaltenen Daten, welche der Steuer-Rechner 127 mittels Durchführens des erfindungsgemäßen Verfahrens basierend auf aktuellen Daten der Anlagen 121 bis 125 (z.B. Auslastung, Verzweigungsinformation, etc.) errechnet und gespeichert hat. Mit anderen Worten verteilt die erste Wafer-Verteileinheit 134 zu prozessierende Wafer des Wafer-Reservoirs 129 auf die Anlagen 121, 122.

Die ersten und zweiten Abscheide-Anlagen 121, 122 können über eine dritte und über eine vierte Kommunikationsverbindung 136, 137 Daten- bzw. Signalaustausch mit dem Steuer-Rechner 127 durchführen. Einerseits können die Abscheide-Anlagen 121, 122 über die Kommunikationsverbindungen 136, 137 dem Steuer-Rechner 127 (z.B. in regelmäßigen Zeitabständen) ihren Auslastungsgrad, die Menge an ihrem Eingang auf Bearbeitung wartenden Wafern, etc. melden. Andererseits können die Abscheide-Anlagen 121, 122 Daten von dem Steuer-Rechner 127 abrufen, basierend auf welchen die Abscheide-Anlagen 121, 122 dann intern (entsprechend dem aktuellen Datum ihrer internen Uhr) die Entscheidung treffen können, ob sie gegenwärtig neue Wafer von dem Wafer-Reservoir akzeptieren oder nicht akzeptieren bzw. ob und mit welchen Gewichtungen die Abscheide-Anlagen 121, 122 nachgeschalteten Ätz-Anlagen 123 bis 125 Wafer bereitstellen.

Über die dritten und vierten Kommunikationsverbindungen 136, 137 erhält der Steuer-Rechner 127 somit Informationen über den Betriebszustand der ersten und zweiten Abscheide-Anlagen 121, 122 (beispielsweise über die gegenwärtigen Kapazitäten bzw. den Auslastungsgrad der Anlagen). Diese Informationen verwendet der Steuer-Rechner 127, um Daten zu generieren (z.B. in Form einer Tabelle oder Datei), welche jede der Anlagen 121 bis 125 abfragen kann, um die jeweils anlagespezifische Entscheidung über die Akzeptanz/das Zurückweisen neuer Wafer zu treffen.

Wafer, die unter Verwendung der Funktionalität der ersten bzw. zweiten Abscheide-Anlagen 121 bzw. 122 derart prozessiert sind, dass auf den Wafern eine Siliziumoxid-Schicht abgeschieden ist, werden den ihnen nachgeschalteten Ätz-Anlagen 123 bis 125 zugeführt.

Über fünfte bis siebte Kommunikationsverbindungen 142 bis 144 können Daten bzw. Steuer-Signale zwischen Steuer-Einheiten der ersten bis dritten Ätz-Anlagen 123 bis 125 einerseits und dem Steuer-Rechner 127 andererseits ausgetauscht werden. Beispielsweise können die ersten bis dritten Ätz-Anlagen 123 bis 125 dem Steuer-Rechner 127 die Information übermitteln, wie ihr gegenwärtiger Auslastungsgrad ist und ob bzw. und in welcher Anzahl Wafer in Puffern der ersten bis dritten Ätz-Anlagen 123 bis 125 enthalten sind. Unter anderem basierend auf diesen Informationen berechnet der Steuer-Rechner 127 gemäß dem erfindungsgemäßen Verfahren Daten, auf welche jede der Anlagen 121 bis 125 mittels einer jeweils darin enthaltenen Steuer-Einheit zugreifen können, welche Daten-für jede der Anlagen 121 bis 125 eine Entscheidungsgrundlage dafür ist, ob die jeweilige Anlage 121 bis 125 gegenwärtig neue Wafer akzeptiert oder nicht.

Wafer, die mittels der ersten bis dritten Ätz-Anlagen 123 bis 125 prozessiert sind, werden einer Wafer-Empfangseinheit 145 bereitgestellt.

Anschaulich bilden das Wafer-Reservoir 129, die Anlagen 121 bis 125 und die Wafer-Empfangseinheit 145 die physikalische Ebene, auf der Wafer verteilt werden. Auf einer anschaulich logischen Ebene wird in dem Steuer-Rechner 127 eine vorteilhafte Verteilung der Wafer auf die Anlagen 121 bis 125 errechnet und in Form von Daten (vorzugsweise in Form von Matrizen) abgelegt. Die Steuer-Einheiten der Anlagen 121 bis 125 kommunizieren auf der logischen Ebene mit dem Steuer-Rechner 127 und fragen die dort generierten Tabellen ab ("Polling-Abfrage", Fig.1C).

Diese Polling-Abfrage wird im Weiteren bezugnehmend auf das in **Fig.1C** gezeigte Flussdiagramm 150 beschrieben.

Nach Schleifenbeginn 152 wird in einen ersten Schritt 154 ein Dispatcher aktiviert, bei jeder Ankunft eines Auftrags und bei jedem Bedienende

In einem zweiten Schritt 156 wird überprüft, ob mehrere Anlagen frei sind.

Ist dies der Fall, so wird in einem dritten Schritt 158 eine eindeutige Auftragsklasse bestimmt. In einem nachfolgenden vierten Schritt 160 wird eine Anlage zur Bearbeitung gemäß PPJ ausgewählt. PPJ ist eine Polling-Tabelle aus Auftragsklassensicht, d.h. eine Liste von m Listen, jeweils mit Elementen aus {1, 2, ..., n}, wobei m die Anzahl der Auftragsklassen und n die Anzahl der Anlagen ist. Die Liste für die gewählte Anlage wird in PPS bis zur betrachteten Auftragsklasse rotiert. PPS ist eine Polling-Tabelle aus Anlagensicht, d.h. eine Liste von n Listen, jeweils mit Elementen aus {1, 2, ..., m}.

Falls die Überprüfung in dem zweiten Schritt 156 ein negatives Ergebnis liefert, wird in einem fünften Schritt 162 für die freie Anlage die Auftragsklasse nach PPS ausgewählt. Die Liste für die gewählte Auftragsklasse wird in PPJ rotiert, bis zur betrachteten Anlage.

Nach dem vierten Schritt 160 bzw. nach dem fünften Schritt 162 ist die Schleife 164 beendet.

Im Weiteren wird wiederum auf Fig.1B Bezug genommen. Mittels der Kommunikationsverbindungen zwischen dem Steuer-Rechner 127 und der physikalischen Ebene kann jede der Anlagen 121 bis 125 Daten (z.B. Werte von ListenElementen) in dem Steuer-Rechner 127 gemäß einem vorgebbaren Abfragezyklus abfragen, entsprechend diesen Daten werden die Wafer auf die Anlagen 121 bis 125 verteilt.

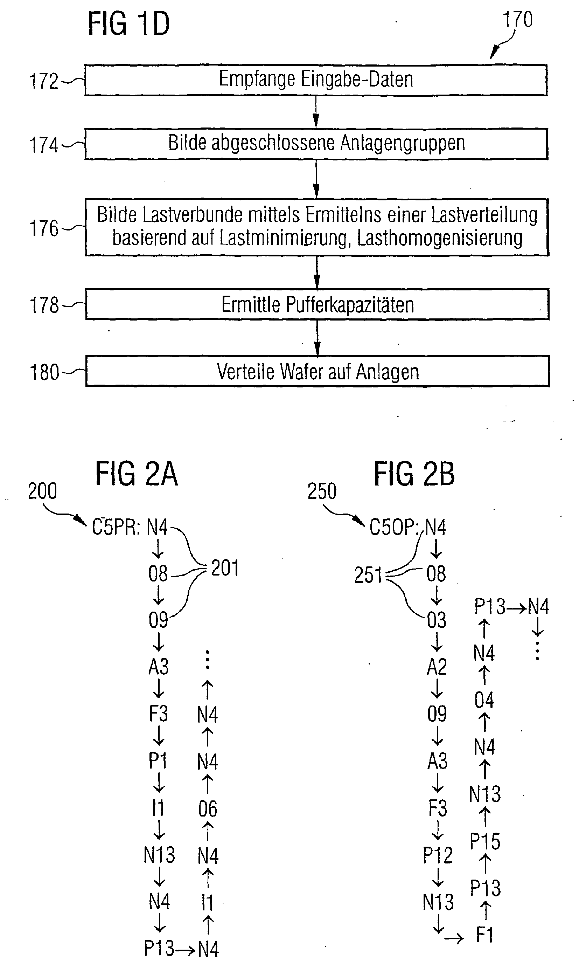

Im Weiteren wird-bezugnehmend auf **Fig.1D** ein Flussdiagramm 170 beschrieben, welches einem Verfahrensablauf in dem Steuer-Rechner 127 entspricht. Flussdiagramm 170 entspricht einem Verfahren gemäß einem bevorzugten Ausführungsbeispiel der Erfindung, mittels welchem ermittelt wird, wie die Wafer auf die Anlagen 121 bis 125 verteilt werden.

In einem ersten Schritt 172 empfängt der Steuer-Rechner 170 Eingabe-Daten von den Anlagen 121 bis 125 sowie von der Nachfrageübermittlungs-Einheit 126. Die Eingabe-daten enthalten Informationen über die nachgelieferten, zu prozessierenden Wafer (Anzahl, Nachliefer-Geschwindigkeit etc.) sowie über Prozessierungsparameter auf den Anlagen 121 bis 125 (Auslastung-der Anlagen, Wafer in den Puffern der Anlagen, Leistungsdaten der Anlagen, Zeitinformation, etc.).

Basierend auf den dem Steuer-Rechner 127 bereitgestellten Informationen werden in einem zweiten Schritt 174 aus den Anlagen 121 bis 125 abgeschlossene Anlagengruppen gebildet. Mit anderen Worten werden in dem Steuer-Rechner 127 die Anlagen 121 bis 125 - entsprechend ihrer Funktionalität - auf logischer Ebene, d.h. unter Verwendung logischer Objekte in dem Speicher 132, zu Anlagengruppen gruppiert.

Ferner werden in einem dritten Schritt 176 Lastverbunde aus den gebildeten Anlagengruppen basierend auf den Kriterien der Auslastungsminimierung und Auslastungshomogenisierung generiert. Die Lastverbunde werden aus den Anlagen derart gebildet, dass die Anlagen des Lastverbundes mittels geeigneter Wahl der Verzweigungen zwischen den Anlagen 121 bis 125 möglichst gering und gleichmäßig ausgelastet werden können.

In einem vierten Schritt 178 werden Pufferkapazitäten der Anlagen 121 bis 125 errechnet. Mit anderen Worten wird durch die Schritte 176 und 178 in dem Steuer-Rechner 127 eine solche Verteilung der Wafer auf die Anlagen 121 bis 125 berechnet, dass die Gesamtlast auf den Anlagen möglichst gering ist, die Anlagen simultan möglichst gleichmäßig ausgelastet sind und einer jeweiligen Anlage nicht derart viele Wafer nachgeliefert werden, dass die Kapazität des in einer jeweiligen Anlage 121 bis 125 enthaltenen Puffers überschritten wird. Dadurch wird ein Überschwemmen, aber auch ein Aushungern, der Anlagen 121 bis 125 vermieden.

In einem fünften Schritt 180 übermittelt der Steuer-Rechner 127 den Steuer-Einheiten der Anlagen 121 bis 125 derartige Steuer-Signale, dass die in der Fertigungslinie befindlichen Wafer entsprechend der ermittelten Lastverteilung auf die Anlagen 121 bis 125 aufgeteilt werden.

In **Fig.2A** ist beispielhaft für eine erste Produktgruppe 200 mit der Bezeichnung "C5PR", die einer bestimmten Auftragsart entspricht, dargestellt, welche Lastverbunde 201 von in den in dieser Auftragsart aufeinanderfolgenden Auftragsklassen zu besuchen sind, und zugeordnete Auftragsklassen durchzuführen sind, um das entsprechende Produkt herzustellen.

Ferner ist in **Fig.2B** eine zweite Produktgruppe 250 (d.h. eine zweite Auftragsart) gezeigt, die einem anderen Halbleiterprodukt zugeordnet ist. Um dieses Produkt herzustellen, ist eine Vielzahl von Lastverbunden 251 zu besuchen und dort jeweils gemäß des Rezepts der jeweils zugehörigen Auftragsklasse durchzuführen. Die zweite Produktgruppe 250 ist mit der Bezeichnung "C5OP" bezeichnet.

Jeder der Lastverbunde 201, 251 ist mit einem Buchstaben zum Bezeichnen eines jeweiligen Fertigungsschritts versehen. Beispielsweise steht der Buchstabe N für "Nassätzen", O für "Ofen", A für "Abscheiden", P für "Plasmaprozess", F für "Fotolithographie", etc. Die einem jeweiligen Lastverbund zugeordnete Zahl ist ein Code dafür, dass ein bestimmter Lastverbund eine gewisse Menge von austauschbaren Funktionen beherrscht und Last aus mit diesen austauschbaren Funktionen assoziierten Auftragsklassen, denen wiederum bestimmte Prozessierungsparameter zugehörig sind, annehmen und gleichmäßig verteilen kann. Allgemeine Beispiele für Prozessierungsparameter sind Prozessierungszeit, Prozessierungsbedingungen (z.B. Druck und Temperatur) sowie Prozessierungsmaterialien (z.B. Ätz-Material, Abscheide-Material, etc.). Beispielsweise bezeichnen N4 und N13 Lastverbunde, die jeweils ein Nassätz-Verfahren beherrschen, wobei sich die zugehörigen Auftragsklassen in den einzelnen Ätz-Parametern (z.B. Ätzmittel, Ätzzeit, Druck und Temperatur) unterscheiden.

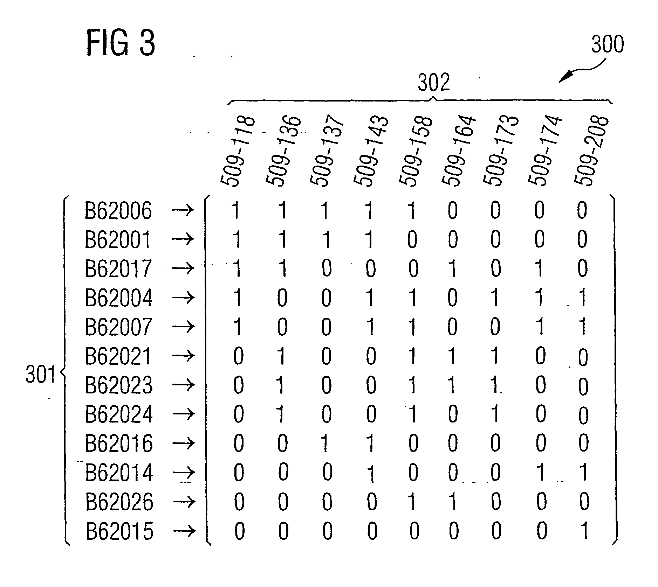

Zum Zwecke einer anschaulichen, übersichtlichen und wenig aufwändig übermittelbaren Darstellung von Auftragsklassen und Anlagen, auf welchen jeweils eine oder mehrere der Auftragsklassen durchführbar ist, kann eine Matrixdarstellung eines Lastverbunds gebildet werden, welcher Lastverband eine Mehrzahl der Anlagen enthält. Eine solche Matrixdarstellung eines Lastverbunds ist in Fig.3 gezeigt.

Im Weiteren wird die in **Fig.3** gezeigte Matrixdarstellung eines Lastverbunds 300 ("Resource Pool LPCVD POLY SI (03)") beschrieben.

Um an Lastverbund 300 zu generieren, werden Anlagen eines Anlagensystems zunächst zu abgeschlossenen Anlagengruppen gruppiert und eine Untermenge der Anlagen ausgewählt, welche den Lastverbund bildet.

Entlang von Zeilen 301 der Matrix 300 sind unterschiedliche Auftragsklassen aufgetragen, von denen beispielsweise die erste als B62006 bezeichnet ist. Entlang der Spalten der Matrix 300 sind unterschiedliche Anlagen aufgetragen, von denen die erste die Bezeichnung 509-118 trägt. Ein jeweiliges Element der Matrix 300 an einem Schnittpunkt einer Zeile 301 mit einer Spalte 302 weist den logischen Wert "0" oder den logischen Wert "1" auf. Ein logischer Wert "1" eines Elements der Matrix 300 zeigt an, dass auf der der jeweiligen Spalte zugeordneten Anlage die der jeweiligen Zeile zugehörige Auftragsklasse ausführbar ist. Zum Beispiel ist auf der Maschine 509-118 die Auftragsklasse B62006 ausführbar. Ein logischer Wert "0" zeigt an, dass auf der jeweiligen Maschine die jeweilige Auftragsklasse nicht ausführbar ist. Zum Beispiel ist auf der Maschine 509-118 die Auftragsklasse B62021 nicht ausführbar. Somit ist die tabellarische Matrixdarstellung von Fig.3 eine mathematische Darstellung, der entnehmbar ist, welche Auftragsklassen auf welchen Maschinen verfügbar sind.

Im Weiteren wird beschrieben, wie die Verteilung von physikalischen Objekten, das heißt Wafern, auf Anlagen eines Anlagensystems gemäß einem bevorzugten Ausführungsbeispiel des erfindungsgemäßen Verfahrens erfolgt.

Zunächst werden basierend auf jeweiligen Anlagenfunktionalitäten Anlagen eines Anlagensystems zu einer Mehrzahl von Anlagengruppen gruppiert.

Unter einer abgeschlossenen Anlagengruppe oder Zusammenhangskomponente wird eine Gruppe von Anlagen verstanden, die gerade so groß ist, dass unter Nutzung des Freiheitsgrads bei der Auftragszuweisung keine Auftragslast aus der betrachteten abgeschlossenen Anlagengruppe herausgetragen werden kann.

Eine abgeschlossene Anlagengruppe wird wie folgt definiert: Zwei unterschiedliche Anlagen x und y befinden sich genau dann in der gleichen abgeschlossenen Anlagengruppe M, wenn es eine Kette von Auftragsklassen $z_1 ..., z_n$ und eine Kette von Anlagen $m_1 ..., m_{n-1}$ gibt, so dass

$z_1$ freigegeben ist auf x und $m_1$;

$z_i$ freigegeben ist auf $m_{i-1}$ und $m_i$, für i = 2, ... , n-1

$z_n$ freigegeben ist auf $m_{n-1}$ und y.

Eine abgeschlossene Anlagengruppe stellt somit die transitive Hülle bezüglich der Relation "es existiert eine Auftragsklasse, die sowohl auf Anlage x als auch auf Anlage y freigegeben ist" dar.

Beispielsweise bilden in **Fig.1A** die ersten bis dritten Anlagen 101 bis 103 eine abgeschlossene Anlagengruppe 110. Die erste Auftragsart 108 kann in einem bestimmten Teilschritt entweder auf der ersten Anlage 101 oder auf der zweiten Anlage 102 durchgeführt werden, wohingegen die zweite Auftragsart 109 auf der zweiten oder der dritten Anlage 102, 103 durchgeführt werden kann.

Anschaulich weisen die Anlagen einer abgeschlossenen Anlagengruppe somit eine untereinander in gewisser Weise austauschbare Funktionalität auf, das heißt, dass eine Last über eine oder beliebig viele Zwischenanlagen der Anlagengruppe austauschbar ist. Zum Beispiel können alle Anlagen, welche die Funktionalität des Ätzens von Via-Löchern aufweisen, Anlagen einer Anlagengruppe sein.

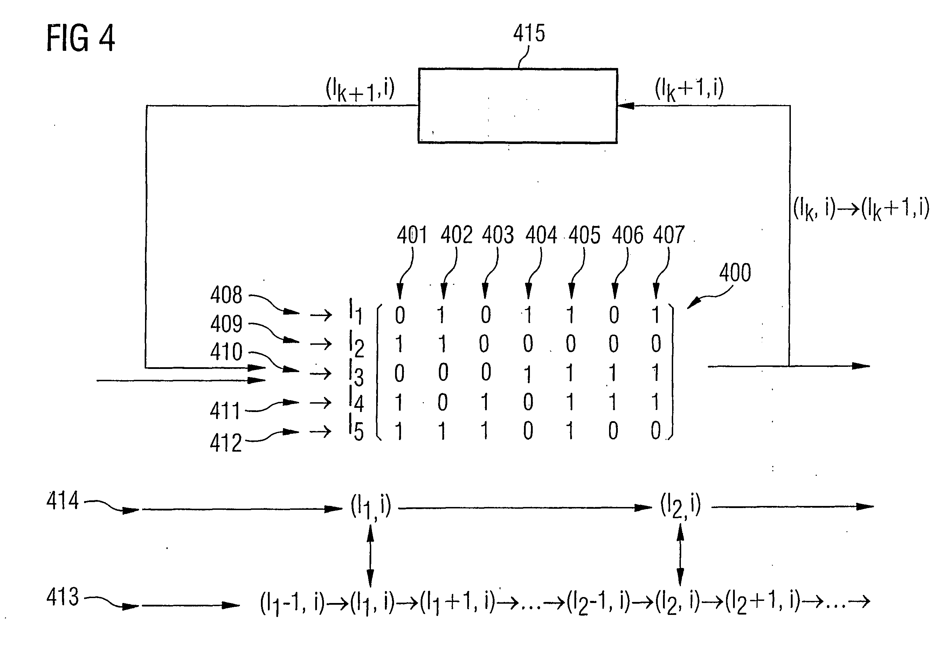

Im Weiteren wird bezugnehmend auf **Fig.4** eine abgeschlossene Anlagengruppe 400 beschrieben.

In Fig.4 ist die Einbettung einer abgeschlossenen Anlagengruppe 400 in ein komplexes Netzwerk gezeigt. Entlang von Spalten der matrixförmigen Darstellung der Anlagengruppe 400 sind erste bis siebte Anlagen 401 bis 407 aufgetragen. Entlang von Zeilen der matrixförmigen abgeschlossenen Anlagengruppe 400 sind erste bis fünfte Auftragsklassen 408 bis 412 aufgetragen. Jedes Zellenfeld der Matrix 400 weist einen logischen Wert "0" oder "1" auf, je nachdem, ob eine bestimmte Anlage für die jeweilige Auftragsklasse freigegeben ist ("1") oder nicht ("0"). Beispielsweise ist die erste Anlage 401 nur für die zweite, vierte und fünfte Auftragsklasse 409, 411, 412 freigegeben, wohingegen sie für die erste und dritte Auftragsklasse 408 und 410 nicht freigegeben ist. Ferner ist in Fig.4 ein Arbeitsplan 413 gezeigt. Ein Arbeitsplan bezogen auf die Sicht der abgeschlossenen Anlagengruppe 400 ist mit Bezugszeichen 414 versehen. Bei der Einbettung der abgeschlossenen Anlagengruppe 400 in die komplexe Fertigung ist ferner eine stochastische Verzögerung 415 implementiert.

Im Weiteren wird ein Algorithmus zum Ermitteln der abgeschlossenen Anlagengruppe 400 in Pseudocode angegeben:

```
i:=0;
R:=L;
WHILE (R≠∅)
    {
    i:=i+1;  N_i^(0):=∅;  L_i^(0):= ∅;
    j:=0;
    wähle ein l∈R beliebig;  L_i^(0):=l
    DO {
        j=j+1;
        Berechne N_i^(j)={m| f(l,m)=1∧l∈L_i^(j-1)∧m∉∪_{k<j}N_i^(k)}
        Berechne L_i^(j)={l| f(l,m)=1∧m∈N_i^(j)}
        }WHILE (N_i^(j)≠∅)
    N_i=∪_j N_i^(j), für alle j
    L_i=∪_j L_i^(j), für alle j
    R:=R\L_i
    }
```

In dem voranstehenden Pseudocode bezeichnen:

$L$       Menge aller Auftragsklassen
$R$       Pool der noch zu betrachtenden Auftragsklassen
$L_i$      Menge der Auftragsklassen der i-ten abgeschlossenen Gruppe von Auftragsklassen
$N_i$      Menge der Anlagen in der i-ten abgeschlossenen Anlagengruppe
$f(i,m)$      Freigabeindikator-Funktion, die den logischen Wert "1" annimmt, wenn die Maschine m für die Auftragsklasse i freigegeben ist;-logischer Wert "0" bedeutet, dass die Maschine m für die Auftragsklasse i gesperrt ist

Im Weiteren wird der voranstehende Pseudocode beschrieben.

Eine Laufvariable i wird auf den Wert Null gesetzt. Die Menge R der noch zu betrachtenden Auftragsklassen wird mit der Menge L aller Auftragsklassen belegt. Ferner wird eine WHILE-Schleife so lange durchgeführt, wie der Pool R der noch zu betrachtenden Auftragsklassen keine leere Menge ist, das heißt, so lange noch Auftragsklassen existieren, die bisher nicht betrachtet worden sind. Die Laufvariable-i wird um eins erhöht. Ferner wird für die Menge der Anlagen in-der i-ten abgeschlossenen Anlagengruppe $N_i$ eine Komponente (0) als leere Menge eingeführt. Analog wird für die Menge der Auftragsklassen der i-ten abgeschlossenen Anlagengruppe $L_i$ eine Komponente (0) als leere Menge eingeführt. Eine Laufvariable j wird auf Null gesetzt. Ferner wird ein 1 aus dem Pool der noch zu betrachtenden Auftragsklassen R beliebig ausgewählt und die erste Komponente (0) der Menge der Auftragsklassen der i-ten abgeschlossenen Gruppe

von Auftragsklassen $L_i$ auf den Wert 1 gesetzt. Im Weiteren wird eine DO-Schleife so lange ausgeführt, wie für einen aktuellen Wert j $N_i^{(j)}$ keine leere Menge ist. Die Laufvariable j wird um eins hochgesetzt. Ferner wird $N_i^{(j)}$ aus Maschinen m gebildet, für welche die Freigabeindikator-Funktion f(l,m)=1 ist, und für die simultan 1 ein Element von $L_i^{(j-1)}$ ist, und für welche die Maschine m kein Element der Vereinigungsmenge der Komponenten $N_i^{(k)}$ mit k<j ist. Ferner wird $L_i^{(j)}$ aus 1 gebildet mit der Eigenschaft, dass f(l,m) =1 ist und die Maschine m Element von $N_i^{(j)}$ ist. Nachfolgend beginnt ggf. ein weiterer Durchlauf der DO-Schleife. Nach Beendigung der DO-Schleife wird die Menge der Anlagen der i-ten abgeschlossenen Anlagengruppe $N_i$ als die Vereinigungsmenge aller Komponenten $N_i^{(j)}$ für alle Werte j definiert. Ferner wird die Menge der Auftragsklassen der i-ten abgeschlossenen Anlagengruppe $L_i$ als die Vereinigungsmenge aller Komponenten $L_i^{(j)}$ für alle Werte j definiert. Aus dem Pool der noch zu betrachtenden Auftragsklassen R wird die Menge der Auftragsklassen der i-ten abgeschlossenen Gruppe von Auftragsklassen $L_i$ ausgenommen. Nachfolgend wird die äußere WHILE-Schleifegegebenenfalls erneut durchlaufen.

In einem anderen Verfahrensschritt des erfindungsgemäßen Verfahrens zum Verteilen von physikalischen Objekten auf Anlagen eines Anlagensystems wird eine Mehrzahl von Lastverbunden gebildet, wobei ein jeweiliger Lastverbund zumindest einen Teil der Anlagen einer Anlagengruppe enthält.

Ein Lastverbund ("Resource Pool") ist aus disjunkten. Untermengen einer abgeschlossenen Anlagengruppe gebildet. In Fig 3 ist ein Lastverbund 300 gezeigt.

Ideal für den Betrieb einer Fabrik ist es, wenn eine abgeschlossene Anlagengruppe stets auch als Lastverbund fungiert. Dann sind nämlich alle Anlagen der Maschinengruppe (Anlagengruppe) im statistischen Mittel gleich stark ausgelastet. Häufig gibt es in einer abgeschlossenen Anlagengruppe aber Inseln von Lastverbunden. Wenn innerhalb eines Lastverbundes alle Auftragsklassen auf allen Anlagen in gleicher Weise (also mit gleicher Prozessgeschwindigkeit) ausgeführt werden können, so wird von einem homogenen Lastverbund gesprochen, andernfalls wird von einem heterogenen Lastverbund gesprochen.

Ein Lastverbund wird gemäß diesem Ausführungsbeispiel auf Basis einer Analyse der abgeschlossenen Anlagengruppen gebildet, indem bestimmte Anlagen aus einer Anlagengruppe identifiziert werden. Somit ist ein Lastverbund in der Regel eine Teilmenge bzw. Untermenge einer abgeschlossenen Anlagengruppe. Ein Lastverbund wird aus (einem Teil der) Anlagen einer abgeschlossenen Anlagengruppe derart gebildet, dass die Anlagen des Lastverbunds mittels geeigneter Wahl der Verzweigungen zwischen den Anlagen homogen ausgelastet werden. Anlagen eines Lastverbunds mit ihrer austauschbaren Funktionalität teilen sich somit eine gemeinsame Aufgabe bzw. dienen einem gemeinsamen Zweck.

In einem anderen Verfahrensschritt des Verfahrens zum Verteilen von Wafern auf Anlagen eines Halbleiterprozessierungs-Anlagensystems wird für die abgeschlossenen Anlagengruppen eine Lastverteilung, d.h. eine günstige Verteilung der Wafer auf die Anlagen, auf Basis einer Auslastungsminimierung und/oder einer Auslastungshomogenisierung ermittelt.

Mit anderen Worten wird, nachdem die abgeschlossenen Anlagengruppen ermittelt sind, eine Lastverteilung ermittelt. Kriterien für diese Lastverteilung sind einerseits, dass die Anlagen möglichst effizient genutzt werden, so dass die Gesamtlast gering ist, und dass die Lasten möglichst gleichmäßig auf die Anlagen verteilt werden.

Dies erfolgt gemäß dem beschriebenen Ausführungsbeispiel mittels Lösens des folgenden Optimierungsproblems für jede abgeschlossene Anlagegruppe:

$$Minimiere: c_1 \sum_{j=1}^{n} U_j + c_2 \sum_{j=1}^{m} (U_j - \tfrac{1}{n} \sum_{j=1}^{n} U_j)^2 \qquad (1)$$

unter Berücksichtigung der folgenden Bedingungen:

$$0 \leq p_{ij} \leq 1, i = 1,...,m, j = 1,...,n \qquad (2)$$

$$p_{ij} = 0, wenn \ f_{ij} = 0 \qquad (3)$$

$$\sum_{j=1}^{n} p_{ij} = 1, i = 1,...,m \qquad (4)$$

$$0 \le U_j \le 1, j = 1,...,n \qquad (5)$$

Die Größen aus Gleichungen (1) bis (5) sind wie folgt definiert:

m     Anzahl der Auftragsklassen in der betrachteten abgeschlossenen Anlagengruppe
n     Anzahl der Anlagen in der betrachteten abgeschlossenen Anlagengruppe
i     Laufvariable für die Auftragsklassen
j     Laufvariable für die Anlagen
$U_j$     Auslastung der Anlage j
$c_1$     Gewichtungsparameter für die Lastminimierung
$c_2$     Gewichtungsparameter für die Lasthomogenisierung
$f_{ij}$     Indikatorfunktion, die angibt, ob Auftragsklasse i auf Anlage j freigegeben ist ("1") oder nicht ("0")
$p_{ij}$     Wahrscheinlichkeit, dass ein Auftrag der Klasse i zur Anlage j verzweigt, wobei die zugehörige Wahrscheinlichkeitsmatrix P ist

Es ist anzumerken, dass optional zusätzliche oder alternative Nebenbedingungen eingeführt werden können, zum Beispiel um Anforderungen aus Gründen der Qualitätssicherheit Rechnung zu tragen. Beispielsweise kann als zusätzliche Nebenbedingung implementiert werden, dass $P_{ij}$ größer als ein Mindestanteil für bestimmte ausgewählte Auftragsklassen i oder ausgewählte Paare (i,j) sein soll.

Ferner werden folgende Größen eingeführt:

$\lambda_i$     Ankunftsrate für Aufträge der Klasse i, mit i = 1,...,n, wobei $\lambda$ der zugehörige Einschleus-Vektor ist
$b_{ij}$     Bearbeitungszeit für Aufträge der Klasse i auf der Anlage j, wobei die zugehörige Matrix der Bedienzeiten B ist
$q_{ij}$     Häufigkeit, mit der die Anlage j den Auftragsstrom i bedient, wobei die zugehörige Verzweigungswahrscheinlichkeits-Matrix Q ist

Anschaulich wird eine Optimierung der Verteilung der physikalischen Objekte, d.h. Wafer, auf die Anlagen des Halbleiterprozessierungs-Anlagensystems unter Berücksichtigung zweier Aspekte vorgenommen:

    1. Es soll für eine Minimierung der Last eine möglichst effiziente Anlagennutzung erfolgen (z.B. sollen schnelle bzw. leistungsfähige Anlagen höher ausgelastet werden als langsame bzw. weniger leistungsfähige Maschinen)
    2. Die Anlagen sollen möglichst gleichmäßig ausgenutzt werden.

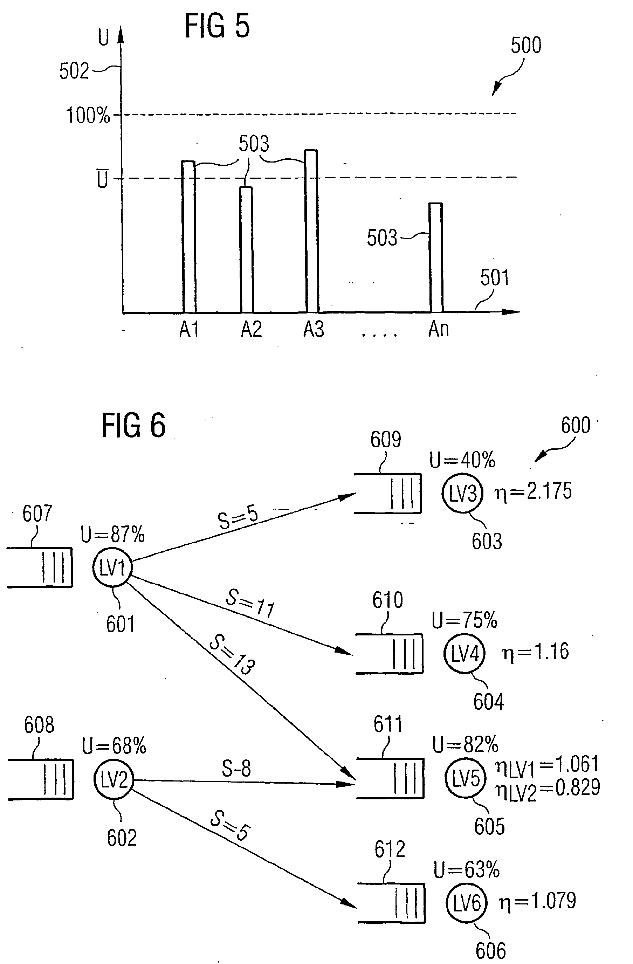

Der physikalisch-mathematische Grund für diese Randbedingungen wird im Weiteren anhand des in Fig.5 gezeigten Diagramms 500 erläutert.

In Diagramm 500 sind entlang der Abszisse 501 unterschiedliche Anlagen A1, A2, A3, ..., An eines Anlagensystems aufgetragen. Entlang der Ordinate 502 ist die zugehörige Auslastung U einer jeweiligen Anlage in Form eines jeweiligen Auslastungsbalkens 501 aufgetragen. Gemäß dem in Fig.5 gezeigten Betriebszustand der Anlagen des Anlagensystems ist jede Auslastung U der Anlagen A1 bis An kleiner als 100%. Die Auslastungen sind um eine mittlere Auslenkung $\overline{U}$ verteilt.

Gemäß der Warteschlangentheorie ergibt sich, dass der Erwartungswert der Durchlaufzeit (Wartezeit plus Prozessierungszeit) für Wafer auf Anlagen eines Anlagensystems umso kürzer ist, je geringer die gesamte Auslastung der Anlagen ist (d.h. minimierte Auslastung), und je geringer die Schwankungen der Auslastungen der einzelnen Anlagen um den Mittelwert sind (d.h. je homogener die Auslastung ist). Somit ist eine geringe Gesamtauslastung und simultan eine homogene Auslastung vorteilhaft für eine ökonomische Prozessierung. In dem Optimierungsproblem von Gleichung (1) sind beide dieser Kriterien berücksichtigt, nämlich die Auslastungsminimierung in dem ersten Term und die Auslastungshomogenisierung in dem zweiten Term.

Mittels Vorgebens der Gewichtungen $c_1$ und $c_2$ ist einstellbar, wie stark der jeweilige Einfluss der beiden Kriterien bei der Bestimmung der Verteilung der Wafer auf die Anlagen des Anlagensystems ist.

Die Gewichtungen $c_1$ und $c_2$ können zum Beispiel zu $c_1=c_2=1$ gewählt werden, was einer gleichmäßigen Gewichtung der beiden Aspekte der Auslastungsminimierung bzw. Auslastungshomogenisierung entspricht. Soll das Kriterium der Auslastungshomogenisierung gegenüber dem Kriterium der Auslastungsminimierung stärker berücksichtigt werden ($c_2>c_1$), so ist beispielsweise $c_2=5$, $c_1=1$ eine gute Wahl. Eine erhebliche Verringerung der erforderlichen Rechenzeit ist erreichbar, wenn das Kriterium der Auslastungshomogenisierung vernachlässigt wird ($c_2=0$), was insbesondere bei einer Kapazitätsauslastung bis zu ungefähr 70% gute Resultate liefert. Das Vernachlässigen der Auslastungshomogenisierung kommt besonders dann in Frage, wenn ein System aus vielen Anlagen bzw. ein komplex verkoppeltes System von Anlagen vorliegt, da in einem solchen Szenario der numerische Aufwand sehr groß werden kann.

Die Lösung des Optimierungsproblems gemäß Gleichung (1) erfolgt gemäß dem beschriebenen Ausführungsbeispiel mittels quadratischer Programmierung in Mathematica™ unter Verwendung eines Standardverfahrens der nichtlinearen Optimierung. Als Verfahren der nichtlinearen Optimierung eignet sich insbesondere "Primal Dual Method for Convex Quadratic Programming", beschrieben beispielsweise in [3], [4]. Diesbezüglich ist anzumerken, dass es im fünften Schritt (Compute step length) auf S.524 von [3] heißen sollte:

$$\alpha_p = \beta \ \min[1, \ \Phi(x_i, d_{xi})]$$

$$\alpha_d = \beta \ \min[1, \ \Phi(u_i, d_{ui})]$$

mit

$$\Phi(h_1, h_2) = \begin{cases} -\frac{h_1}{h_2} : h_2 < 0 \\ \infty : h_2 \geq 0 \end{cases}$$

Eine theoretische Begründung der Methode der quadratischen Optimierung ist in [4] gegeben.

Die Matrix $A = [a_{ij}]_{\substack{i=1,2,\ldots,m \\ j=1,2,\ldots,n}}$ ist wie folgt definiert:

$$a_{ij} = f_{ij} \dot{p}_{ij} b_{ij} \qquad (6)$$

Der Vektor $\vec{U} = (U_1, \ldots, U_n)$ in dem Optimierungsproblem gemäß Gleichung (1) ergibt sich zu:

$$\vec{U} = (\bar{\lambda})^T A \qquad (7)$$

Die Verzweigungswahrscheinlichkeits-Matrix Q aus Anlagensicht $q_{ij}$ berechnet sich gemäß:

$$q_{ij} = \frac{\lambda_i p_{ij}}{\sum_i \lambda_i p_{ij}} \qquad (8)$$

Insbesondere unter einer hohen Last ("heavy traffic") kann die Matrix Q mit ihren Elementen $q_{ij}$ direkt für das Abfragen der Auftragsströme aus Maschinensicht herangezogen werden. Dies gilt in Bereichen, die keiner zusätzlichen Analyse und Optimierung bedürfen, wenn also der Grad der Automatisierung der Steuerung der Fertigungslinie ausreichend hoch ist.

Im Weiteren wird das Gestalten eines Polling-Zyklus beschrieben, der anschaulich als ein zentrales Zuteilungsprotokoll angesehen werden kann. Ein Polling-Zyklus beschreibt den zeitlichen Ablauf, den ein Verfahren oder ein Programm zur Abfrage der in Frage kommenden Anlagen (Geräte, Netzwerkknoten) absolvieren muss.

Ein Polling-Zyklus wird für eine jede Anlage derart gestaltet, dass jede Auftragsklasse über einen Zyklus mit einer Häufigkeit entsprechend der Wahrscheinlichkeit $q_{ij}$ abgefragt wird. Analog dazu wird ein Pollingzyklus für jede Auftragsklasse derart gestaltet, dass jede Anlage über einen Zyklus mit einer Häufigkeit entsprechend der Wahrscheinlichkeit $p_{ij}$ abgefragt wird. Das Zusammenspiel der Pollingzyklen für Anlagen bzw. für Auftragsklassen ist in Fig 1C dargestellt. Unter einer niedrigen und mittleren Last werden die Häufigkeiten in einem automatisierten System so berechnet, wie in [5] und in [6] beschrieben. Mit anderen Worten werden die für Polling-Zyklen relevanten Besuchstafeln ("Visiting Tables") gemäß dem in [5] und [6] beschriebenen Verfahren berechnet.

Wie in [5] beschrieben (vgl. insbesondere Formel (8.1), die lautet:

$$m_i \sim \lambda_i + (1 - \rho - \sum_{j=1}^{N} \lambda_j s_j) \frac{(c_i \lambda_i [\frac{1}{1-\rho_i}] / s_i)^{1/2}}{\sum_{j=1}^{N} s_j (c_j \lambda_j [\frac{1}{1-\rho_j}] / s_j)^{1/2}} \, ,$$

auf S.158), wird die Zahl der Besuche je Auftragsklasse im Polling-Zyklus einer Anlage ermittelt. Der Proportionalitätsfaktor ergibt sich mittels Bestimmens des besten gemeinsamen Nenners bei einer vorgegebenen maximalen Länge eines Polling-Zyklus (typischerweise wird die Länge eines Polling-Zyklus zu ungefähr vierzig gewählt). Es ist anzumerken, dass der oben angesprochene Fall einer hohen Last ("heavy traffic") in [5] legitimiert ist mittels eines Grenzübergangs (Eins minus Auslastung minus Overhead gegen Nul], vgl. [5], S.160, erster vollständiger Satz).

Ferner wird das in [6] beschriebene Verfahren mit der Bezeichnung "Golden Ratio Policy" angewendet, vorausgesetzt, dass zwischen der Bearbeitung unterschiedlicher Auftragsklassen keine hohen Rüstaufwände, wie etwa Gaswechsel in der Implantation, erforderlich sind. (vgl. [6], S.356, Abschnitt "Step 3: Determination of the order within the table"). Gemäß diesem Verfahren werden die einzelnen Besuche in einem Polling-Zyklus derart angeordnet, dass die Abstände zwischen aufeinanderfolgenden Besuchen einer Auftragsklasse möglichst gleich sind. Ist die Größe der Polling-Tabelle und die Anzahl der einzelnen Besuche ermittelt, so wird anschaulich die Tabelle derart geordnet, dass eine möglichst gleichmäßige zeitliche Verteilung der Besuche realisiert ist.

Häufig ist es ausreichend, die Matrizen P und Q einem Operateur (z.B. einen Vorarbeiter des Halbleiterprozessierungs-Systems) als Anweisung zum Verteilen, von Wafern auf einzelne Anlagen beim Steuern des Halbleiterfertigungs-Systems bereitzustellen. Alternativ können die Matrizen P und Q einer Steuer-Einrichtung (z.B. einem Steuer-Computer) zum entsprechenden automatisierten Steuern der Anlage bereitgestellt werden. In den meisten Bereichen der Halbleiterfertigung (mit Ausnahme der Ofentechnik und der Implantation) bedarf es keiner zusätzlichen Analyse und Optimierung.

Somit werden gemäß dem erfindungsgemäßen Verfahren zum Verteilen von physikalischen Objekten auf Anlagen eines Anlagensystems die physikalischen Objekte entsprechend der ermittelten Lastverteilung auf die Anlagen der Lastverbunde verteilt.

Besonders vorteilhaft ist es, die physikalischen Objekte auf einem nachgeschalteten Lastverbund unter Berücksichtigung mindestens eines dem nachgeschalteten Lastverbund vorgeschalteten Lastverbunds zu verteilen.

Im Weiteren wird die Verarbeitung des Netzzustandes in dem ausgehend von einem betrachteten Lastverbund stromabwärts liegenden Lastverbund gemäß dem bevorzugten Ausführungsbeispiel der Erfindung beschrieben.

Mittels Verarbeitens des Netzzustandes in den jeweils von einem Punkt der Abarbeitungskontrolle stromabwärts liegenden Lastverbunden wird die Abarbeitungsreihenfolge ("Sequencing") gemäß dem C/R-Verfahren derart verändert, dass dadurch ein Überschwemmen oder Aushungern von Lastverbunden vermieden wird.

Unter einem Überschwemmen eines Lastverbunds kann verstanden werden, dass dem Lastverbund zu viele physikalische Objekte, das heißt Halbleiter-Lose, nachgeliefert werden, so dass dieser mit der Verarbeitung nicht nachkommt. Unter einem Aushungern von Lastverbunden wird insbesondere verstanden, dass z.B. infolge des Unterbrechens der Zufuhr von Halbleiter-Losen zu einem Lastverbund diesem Lastverbund nicht mehr ausreichend viele physikalische Objekte zum Abarbeiten bereitgestellt sind.

Das Optimieren der Abarbeitungsreihenfolge in der Fertigung birgt in vielen Fällen nur circa ein Sechstel des Potentials zum Steigern der Fertigungskapazität, welches mittels Optimierens der Verzweigung der Aufträge ("Routing") gegeben ist.

Allerdings ist die Wirkung der Abarbeitungsreihenfolge auf die höheren Momente der Zufallsvariablen Durchlaufzeit (beispielsweise der Liefertreue) erheblich. Besonders unter Hochlast besteht die Gefahr, dass eine strikte Einhaltung der C/R-Regel zu einem unerwünschten Oszillieren der Bestände in der Fertigungslinie führen kann. Um dies zu vermeiden, werden die Verteilungsfunktionen der Warteschlangenlängen berücksichtigt.

Es wird daher ein Feststellungsverfahren bereitgestellt, das ein Kriterium liefert, wann das Beliefern eines Lastverbundes zu einer Überlieferung führen würde. Dies erfolgt unter Verwendung eines Modells, wie es in [7] beschrieben ist.

Zur Veranschaulichung dieses Modells ist in **Fig.6** ein Beispiel einer Lastverbund-Anordnung 600 dargestellt, die erste bis sechste Lastverbunde 601 bis 606 enthält. Fig.6 zeigt ein analytisches Modell für das "Sequencing"-Problem bei hintereinandergeschalteten Lastverbunden.

Die ersten und zweiten Lastverbunde 601, 602 bilden Lastverbunde einer vorgeschalteten Stufe, die Lastverbunde. 603 bis 606 sind bezüglich der Lastverbunde 601, 602 stromabwärts liegend und gehören somit einer nachgeschalteten Ebene von Lastverbunden an. Jedem der Lastverbunde 601 bis 6-06 ist ein jeweils zugeordneter Puffer 607 bis 612 vorgeschaltet, der zum Aufnehmen eintreffender Wafer-Lose eingerichtet ist. Für jeden der Lastverbunde 601 bis 606 ist eine zugehörige Auslastung U (in %) angegeben. Ferner ist ein Schwellenwert S zwischen einem jeweils vorgeschalteten und einem jeweils nachgeschalteten Lastverbund in Fig.6 gezeigt. Zum Beispiel ist der Schwellenwert für das Nachliefern von Wafer-Losen des ersten Lastverbunds 601 an den dritten Lastverbund 603 S=5. Ferner sind Raten η angegeben, mit denen nachgeschalteten Lastverbunden Wafer-Lose bereitgestellt werden können. An dem Eingang von jedem der beiden vorgeschalteten Lastverbunde 601 ist eine jeweilige Auftragsklasse mit einer jeweiligen Ankunftsrate λ bereitgestellt.

Es werden auftragsklassenspezifische Schwellenwerte für die Warteschlange vor einer jeweiligen Einheit mit einer Rate η bestimmt, und zwar unter Verwendung einer Warteschlangen-Analyse, welche Angebot und Nachfrage berücksichtigt. Nur wenn stromabwärts für alle Auftragsklassen der Schwellenwert bereits erreicht ist, werden auch bereits überschwemmten Lastverbunden Wafer zugeführt. Andernfalls werden Wafer solchen Lastverbunden zugeführt, die für zusätzliche Wafer-Lose noch Aufnahmekapazität haben.

Ferner sind die Nachfrageprozesse aus den Lastverbunden stromabwärts zu bestimmen. Die Nachfragerate η steht mit der Auslastung $U_1$ im betrachteten Lastverbund und jener in dem stromabwärts liegenden Lastverbund mit der Auslastung $U_2$ in dem Zusammenhang $\eta = U_1/U_2$. Beispielsweise ergibt sich bei der Auslastung U=87% des ersten Lastverbundes 601 und einer Auslastung U=40% des dritten Lastverbundes 603 eine Nachfragerate η=2.175.

Für ein Tandem aus einem vorgeschalteten Lastverbund und einem diesem nachgeschalteten Lastverbund (beispielsweise erster Lastverbund 601 und dritter Lastverbund 603) ergibt sich ein Kriterium, ob angesichts der Menge der an dem nachgeschalteten Lastverbund in der Warteschlange befindlichen Wafern von dem vorgeschalteten Lastverbund weitere Wafer nachgeliefert werden sollen oder ob das Nachliefern ausgesetzt werden soll. Ziel ist somit die Harmonisierung von Angebot und Nachfrage in Niederstromrichtung.

Als Kriterium dafür, ob die Kapazität eines jeweiligen Puffers 607 bis 612 ausreichend ist, kann die folgende Ungleichung angesehen werden:

$$\frac{E[WIP_{Tandem, lim itierter Puffer}] - E[WIP_{Tandem, unlim itierter Puffer}]}{E[WIP_{Tandem, lim itierter Puffer}]} < \varepsilon \qquad (9)$$

Hierbei ist $E[WIP_{Tandem, limitierter Puffer}]$ der Erwartungswert des Work-in-Progress (WIP) für ein Tandem aus vor- und nachgeschalteten Lastverbunden im Falle eines limitierten Puffers. $E[WIP_{Tandem, unlimitierter Puffer}]$ ist der Erwartungswert der Work-in-Progress für ein Tandem aus vor- und nachgeschalteten Lastverbunden im Falle eines unlimitierten Puffers. Als Güteparameter ε kann beispielsweise ε=0.1 gewählt werden.

Ein weiteres Kriterium ist, dass das Pufferlimit größer oder gleich dem Erwartungswert der Work-in-Progress eines einzigen isolierten Lastverbundes sein soll.

Die Lastverbunde innerhalb einer abgeschlossenen Anlagengruppe werden mittels Inspizierens der zugehörigen Auslastungsmatrix identifiziert. Die Legitimation zum Behandeln eines Lastverbundes als monolithischen Block mit Blick auf die verkehrstheoretische Behandlung liefert ein heavy-traffic-Theorem von Kelly und Laws, die sogenannte "Resource Pooling Condition, vgl. [8].

Ein Vorteil der erfindungsgemäßen Verfahrens ist darin zu sehen, dass ein Ankunftsdeterminismus nicht vorausgesetzt wird und die Verkehrsintensitäten berücksichtigt werden.

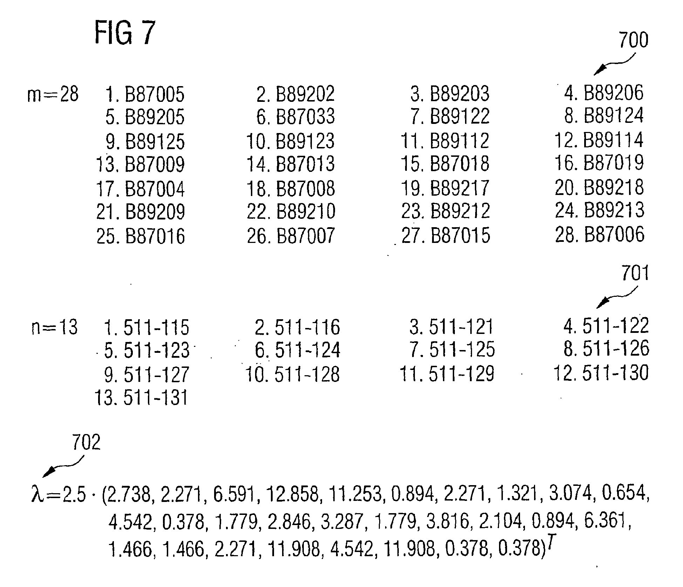

Im Weiteren wird bezugnehmend auf Fig.7 bis Fig.11 ein anderes Ausführungsbeispiel der Erfindung beschrieben.

Wie in **Fig.7** gezeigt, sind gemäß diesem Beispiel m=28 Auftragsklassen 700 (oder Einzelprozessanweisungen) vorgesehen. Ferner sind n=13 Anlagen 701 vorgesehen. Die Anlagen 701 sind in den nachfolgenden beschriebenen Matrizen spaltenweise angeordnet, die Auftragsklassen 700 zeilenweise. Ferner ist in Fig.7 ein Ankunftsvektor λ 702 (mit 28 Vektorkomponenten in der Einheit Scheiben pro Stunde) in transponierter Schreibweise dargestellt.

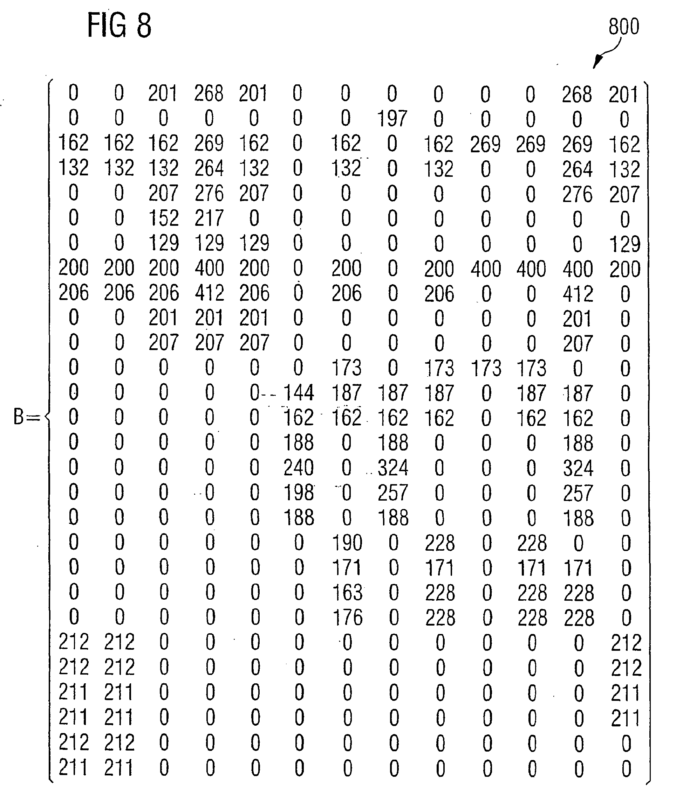

In **Fig.8** ist eine Bedienzeiten-Matrix 800 gezeigt (deren Elemente die Dimension "Minuten pro hundert Scheiben" aufweisen), wobei entlang der Spalten der Bedienzeiten-Matrix 800 die n=13 Anlagen 701 und entlang der Zeilen die m=28 Auftragsklassen 700 aufgetragen sind. In der Bedienzeiten-Matrix 800 sind die digitalen Werte ("1" bzw. "0") der Freigabematrix $f_{ij}$ berücksichtigt. So bedeutet das Element mit dem Wert "0" in der ersten Zeile und der ersten Spalte der Bedienzeiten-Matrix 800, dass die Anlage 1.511-115 für die Auftragsklasse 1.B87005 nicht freigegeben ist. Das Element mit dem Wert "201" in der ersten Zeile und der dritten Spalte der Bedienzeitmatrix 800 bedeutet, dass die dritte Anlage 3.511-121 für die Auftragsklasse 1.B87005 mit einer Bedienzeit von 201 Minuten pro hundert Scheiben freigegeben ist.

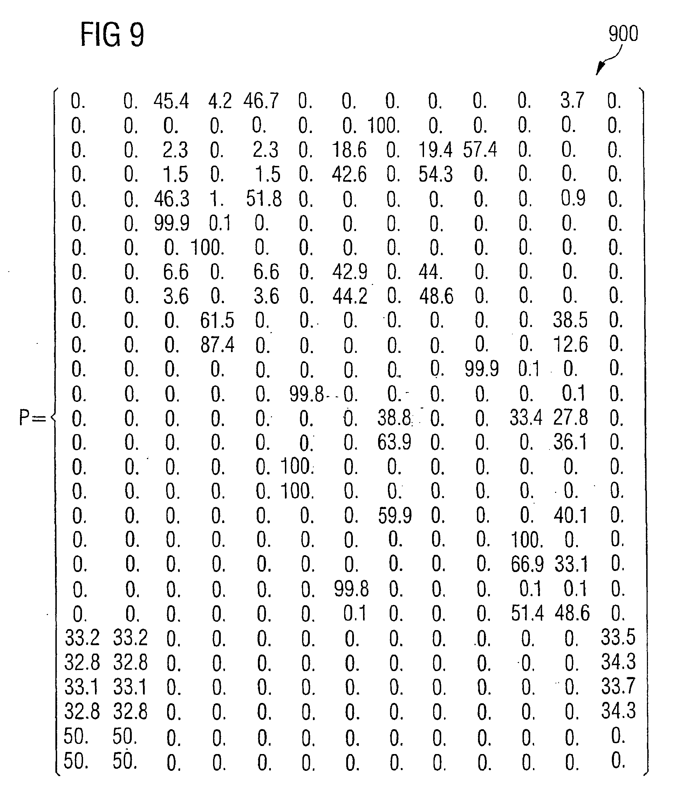

In **Fig.9** ist eine Verzweigungswahrscheinlichkeits-Matrix 900 (deren Elemente die Dimension Prozent aufweisen) aufgetragen. Entlang jeder Zeile der Verzweigungswahrscheinlichkeits Matrix summieren, sich die Elemente zu 100% auf. Beispielsweise wird die erste Auftragsklasse 1.B87005 zu 45.4% auf der dritten Anlage 3.511-121, zu 4.2% auf der vierten Anlage 4.511-122, zu 46.7% auf der fünften Anlage 5.511-123 und zu 3.7% auf der zwölften Anlage 12.511-130 durchgeführt.

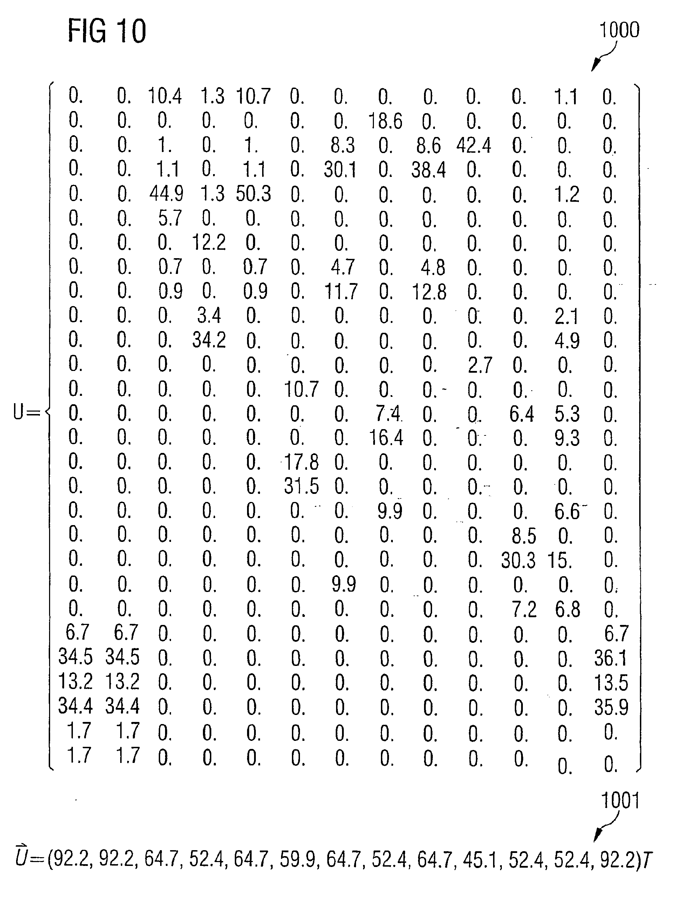

In **Fig.10** ist die Auslastungs-Matrix U 1000 gezeigt. Da sich die Wahrscheinlichkeits-Prozentsätze in der ersten Spalte der Auslastungs-Matrix 1000 zu 92.2% ergänzen, wie in dem Anlagen-Auslastungsvektor U 1001 gezeigt, hat die erste Anlage 1.511-115 eine Auslastung von 92.2%.

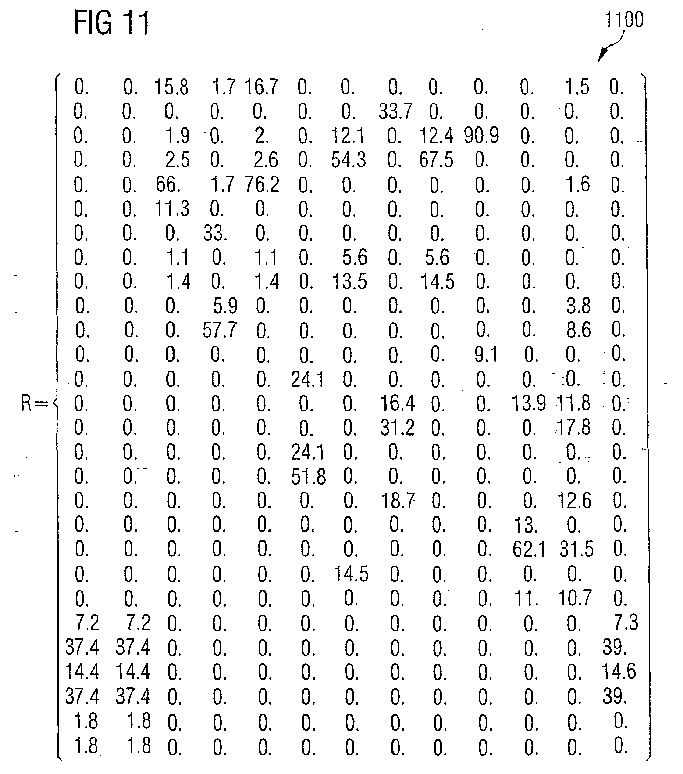

Ferner ist in **Fig.11** die Pollingzyklus-Matrix R 1100 aus Anlagensicht gezeigt. Der Kapazitätsgewinn gegenüber einer "Shortest Processing Time First"-ähnlichen Abfertigungsregel mit Geschwindigkeitsranking beträgt 6.17% auf den am stärksten ausgelasteten Anlagen, 3.53% für den Durchschnitt über alle Anlagen.

In diesem Dokument sind folgende Veröffentlichungen zitiert:

[1] Palmeri, V et al. "An Analysis of the 'K-Step Ahead' Minimum Inventory Variability Policy® Using SEMATECH Semiconductor Manufacturing Data in a Discrete-Event Simulation Model", Proceedings of the IEEE 6th International Conference on Emerging Technologie and Factory Automation (EFTA), Los Angelos, 1997, Seiten 520 bis 527

[2] Li, S et al. "Minimum Inventory Variability Schedule With Applications in Semiconductor Fabrication", IEEE Transactions on Semiconductor Manufacturing, Vol.9, Nr.1, 1996, Seiten 1 bis 5

[3] Ashgar Bhatti, M "Practical Optimization Methods", Springer Verlag, New York; 2000, Seiten 495-498, 502-510, 520-524, 535-539

[4] Krekó, B "Optimierung - Nichtlineare Modelle", VEB Deutscher Verlag der Wissenschaften, Berlin, 1974

[5] Boxma, OJ et al. "Efficient visit frequencies for polling tables: minimization of waiting cost", Queueing Systems 9, Seiten 133 bis 162, 1991

[6] Boxma, OJ et al. "Optimization of polling systems", In: King, PJB et al. (eds.) "Performance '90", North Holland, Amsterdam 1990, Seiten 349 bis 361

[7] Gold, H et al. "Performance Analysis of a Batch Service System" In: Labetoulle, J et al. (eds.) "The Fundamental Role of Teletraffic in the Evolution of Telecommunications Networks, Volume I", Elsevier, Amsterdam, Seiten 155 bis 168, 1994

[8] Kelly, FP et al. "Dynamic Routing in open queueing networks: Brownian models, cut constraints and ressource pooling", Queueing Systems 13, Seiten 47 bis 86, 1993

[9] DE 40 24 307 A1

Bezugszeichenliste

| | |
|---|---|
| 100 | Halbleiterprozessierungs-Anlagensystem |
| 101 | erste Anlage |
| 102 | zweite Anlage |
| 103 | dritte Anlage |
| 104 | vierte Anlage |
| 105 | fünfte Anlage |
| 106 | sechste Anlage |
| 107 | siebte Anlage |
| 108 | erste Auftragsart |
| 109 | zweite Auftragsart |
| 110 | Anlagengruppe |
| 111 | Verzweigungen |
| 120 | Halbleiterprozessierungs-Anlagensystem |
| 121 | erste Abscheide-Anlage |

| 122 | zweite Abscheide-Anlage |
|---|---|
| 123 | erste Ätz-Anlage |
| 124 | zweite Ätz-Anlage |
| 125 | dritte Ätz-Anlage |
| 126 | Nachfrageübermittlungs-Einheit |
| 127 | Steuer-Rechner |
| 128 | erste Kommunikationsverbindung |
| zu | Wafer-Reservoir |
| 130 | zweite Kommunikationsverbindung |
| 131 | Eingabe-/Ausgabe-Einheit |
| 132 | Speicher |
| 133 | CPU |
| 136 | dritte Kommunikationsverbindung |
| 137 | vierte Kommunikationsverbindung |
| 142 | fünfte Kommunikationsverbindung |
| 143 | sechste Kommunikationsverbindung |
| 144 | siebte Kommunikationsverbindung |
| 145 | Wafer-Empfangseinheit |
| 150 | Flussdiagramm |
| 152 | Schleifenbeginn |
| 154 | erster Schritt |
| 156 | zweiter Schritt |
| 158 | dritter Schritt |
| 160 | vierter Schritt |
| 162 | fünfter Schritt |
| 164 | Schleifenende |
| 170 | Flussdiagramm |
| 172 | erster Schritt |
| 174 | zweiter Schritt |
| 176 | dritter Schritt |
| 178 | vierter Schritt |
| 180 | fünfter Schritt |
| 200 | erste Produktgruppe |
| 201 | Auftragsklassen |
| 250 | zweite Produktgruppe |
| 251 | Lastverbunde |
| 300 | Lastverbund |
| 301 | Zeilen |
| 302 | Spalten |
| 400 | abgeschlossene Anlagengruppe |
| 401 | erste Anlage |
| 402 | zweite Anlage |
| 403 | dritte Anlage |
| 40 | 4 vierte Anlage |
| 405 | fünfte Anlage |
| 406 | sechste Anlage |
| 407 | siebte Anlage |
| 408 | erste Auftragsklasse |
| 409 | zweite Auftragsklasse |
| 410 | dritte Auftragsklasse |
| 411 | vierte Auftragsklasse |
| 412 | fünfte Auftragsklasse |
| 412 | dritte Anlage |
| 413 | Arbeitsplan |
| 414 | Arbeitsplan |
| 415 | stochastische Verzögerung |
| 500 | Diagramm |
| 501 | Abszisse |

| 502 | Ordinate |
|---|---|
| 503 | Auslastungsbalken |
| 600 | Lastverbund-Anordnung |
| 601 | erster Lastverbund |
| 602 | zweiter Lastverbund |
| 603 | dritter Lastverbund |
| 604 | vierter Lastverbund |
| 605 | fünfter Lastverbund |
| 606 | sechster Lastverbund |
| 607 | erster Puffer |
| 608 | zweiter Puffer |
| 609 | dritter Puffer |
| 610 | vierter Puffer |
| 611 | fünfter Puffer |
| 612 | sechster Puffer |
| 700 | Auftragsklassen |
| 701 | Anlagen |
| 702 | Ankunftsvektor |
| 800 | Bedienzeiten-Matrix |
| 900 | Verzweigungswahrscheinlichkeits-Matrix |
| 1000 | Auslastungs-Matrix |
| 1001 | Anlagenauslastungs-Vektor |
| 1100 | Polling-Zyklus |

**Patentansprüche**

1. Verfahren zum Ermitteln einer Verteilung von physikalischen Objekten auf Anlagen eines Anlagensystems mit einer Mehrzahl von Anlagen, wobei gemäß dem Verfahren

    • basierend auf einer jeweiligen Anlagenfunktionalität die Anlagen zu einer Mehrzahl von Anlagengruppen gruppiert werden;
    • eine Mehrzahl von Lastverbunden gebildet wird, wobei ein jeweiliger Lastverbund zumindest einen Teil der Anlagen einer Anlagengruppe enthält;
    • für die Lastverbunde eine Lastverteilung auf Basis einer Auslastungsminimierung und einer Auslastungshomogenisierung ermittelt wird, wobei gemäß der Lastverteilung die physikalischen Objekte auf die Anlagen der Lastverbunde zu verteilen sind.

2. Verfahren nach Anspruch 1,
bei dem das Gruppieren der Anlagen zu der Mehrzahl von Anlagengruppen unter Berücksichtigung der Möglichkeiten der Zusammenhänge der Verteilung der physikalischen Objekte auf die Anlagen durchgeführt wird.

3. Verfahren nach Anspruch 1 oder 2,
bei dem das Gruppieren der Anlagen zu der Mehrzahl von Anlagengruppen unter Bilden einer transitiven Hülle der Anlagen bezüglich einer oder mehrerer Auftragsklassen durchgeführt wird, wobei eine Auftragsklasse einem Prozessabschnitt des Bearbeitens eines physikalischen Objekts entspricht.

4. Verfahren nach einem der Ansprüche 1 bis 3,
bei dem die Anlagengruppen derart gebildet werden, dass unterschiedliche Anlagengruppen disjunkt sind.

5. Verfahren nach einem der Ansprüche 1 bis 4,
bei dem die Lastverbunde derart gebildet werden, dass mittels geeigneter Wahl von Verzweigungsgewichten zwischen den Anlagen des Lastverbunds die Anlagen im Wesentlichen homogen auslastbar sind.

6. Verfahren nach einem der Ansprüche 1 bis 5,
bei dem für die Lastverbunde eine Lastverteilung auf Basis einer Auslastungsminimierung und einer Auslastungshomogenisierung derart ermittelt wird, das mittels einer Gewichtung die Priorisierung zwischen Auslastungsminimierung und Auslastungshomogenisierung vorgegeben wird.

**7.** Verfahren nach Anspruch 6,
bei dem die Gewichtung derart vorgegeben wird, dass die Auslastungshomogenisierung eine höhere Priorität erhält als die Auslastungsminimierung.

**8.** Verfahren nach einem der Ansprüche 1 bis 7,
bei dem bei dem Ermitteln der Lastverteilung Verzweigungen zwischen Anlagen zum Verteilen der physikalischen Objekte auf die Anlagen ermittelt werden.

**9.** Verfahren nach Anspruch 8,
bei dem ferner gewichtete Verzweigungen ermittelt werden.

**10.** Verfahren nach einem der Ansprüche 1 bis 9,
bei dem das Ermitteln der Lastverteilung der Lastverbunde unter Verwendung der

    • Primal Dual Method for Convex Quadratic Programming;
    • Primal Affine Scaling Method for Convex Quadratic Programming; oder
    • Active Set Method for Convex Quadratic Programming durchgeführt wird.

**11.** Verfahren nach einem der Ansprüche 1 bis 10,
bei dem die physikalischen Objekte gemäß der Lastverteilung auf die Anlagen der Lastverbunde verteilt werden.

**12.** Verfahren nach Anspruch 11,
bei dem die physikalischen Objekte auf einen nachgeschalteten Lastverbund unter Berücksichtigung mindestens eines dem nachgeschalteten Lastverbund vorgeschalteten Lastverbunds verteilt werden.

**13.** Verfahren nach Anspruch 12,
bei dem die physikalischen Objekte auf den nachgeschalteten Lastverbund unter Verwendung des Critical-Ratio-Kriteriums verteilt werden.

**14.** Verfahren nach Anspruch 12 oder 13,
bei dem das Verteilen der physikalischen Objekte auf den nachgeschalteten Lastverbund unterbrochen wird, wenn die Anzahl der auf diesen Lastverbund verteilten physikalischen Objekte einen ersten Schwellenwert überschreitet.

**15.** Verfahren nach Anspruch 14,
bei dem das Verteilen der physikalischen Objekte auf den nachgeschalteten Lastverbund fortgesetzt wird, wenn die Anzahl der auf diesen Lastverbund verteilten physikalischen Objekte einen zweiten Schwellenwert unterschreitet.

**16.** Verfahren nach einem der Ansprüche 1 bis 15,
bei dem eine ermittelte Verteilung von physikalischen Objekten auf die Anlagen mittels einer Simulation verifiziert wird.

**17.** Verfahren nach einem der Ansprüche 1 bis 16,
bei dem bei dem Verteilen der physikalischen Objekte auf die Anlagen des Anlagensystems eine Reihenfolge eines Bearbeitens der physikalischen Objekte gesteuert wird.

**18.** Verfahren nach einem der Ansprüche 1 bis 17,
bei dem das Verteilen der physikalischen Objekte auf die Anlagen des Anlagensystems basierend auf einer Verarbeitungszeit der physikalischen Objekte erfolgt.

**19.** Verfahren nach einem der Ansprüche 1 bis 18,
bei dem das Anlagensystem ein Halbleiterprozessierungs-Anlagensystem ist.

**20.** Verfahren nach einem der Ansprüche 1 bis 19,
bei dem das physikalische Objekt ein Wafer oder ein Wafer-Los mit einer Mehrzahl von Wafern ist.

**21.** Vorrichtung zum Ermitteln einer Verteilung von physikalischen Objekten auf Anlagen eines Anlagensystems mit einer Mehrzahl von Anlagen, mit einem Prozessor, der derart eingerichtet ist, dass folgende Verfahrensschritte durchgeführt werden:

• basierend auf einer jeweiligen Anlagenfunktionalität werden die Anlagen zu einer Mehrzahl von Anlagengruppen gruppiert;
• eine Mehrzahl von Lastverbunden wird gebildet, wobei ein jeweiliger Lastverbund zumindest einen Teil der Anlagen einer Anlagengruppe enthält;
• für die Lastverbunde wird eine Lastverteilung auf Basis einer Auslastungsminimierung und einer Auslastungshomogenisierung ermittelt, wobei gemäß der Lastverteilung die physikalischen Objekte auf die Anlagen der Lastverbunde zu verteilen sind.

22. Computerprogramm zum Ermitteln einer Verteilung von physikalischen Objekten auf Anlagen eines Anlagensystems mit einer Mehrzahl von Anlagen, das, wenn es von einem Prozessor ausgeführt wird, die Verfahrensschritte gemäß Anspruch 1 durchführt.

23. Computerlesbares Speichermedium, in dem ein Computerprogramm zum Ermitteln einer Verteilung von physikalischen Objekten auf Anlagen eines Anlagensystems mit einer Mehrzahl von Anlagen gemäß Anspruch 22 gespeichert ist.

**Claims**

1. A method for determining a distribution of physical objects to stations of a system of stations comprising a plurality of stations, wherein, according to the method,

   • the stations are grouped to form a plurality of station groups on the basis of a respective station functionality;
   • a plurality of load pools is formed, a respective load pool containing at least some of the stations of a station group;
   • for the load pools, a load distribution is determined on the basis of load minimization and load homogenization, the physical objects are to be distributed to the stations of the load pools in accordance with the load distribution.

2. The method as claimed in claim 1,
   in which the grouping of the stations to form the plurality of station groups is carried out with consideration of the possibilities of the relationships of the distribution of the physical objects to the stations.

3. The method as claimed in claim 1 or 2,
   in which the grouping of the stations to form the plurality of station groups is performed by forming a transitive envelope of the stations with respect to one or more job classes, a job class corresponding to a process section of the processing of a physical object.

4. The method as claimed in one of claims 1 to 3,
   in which the station groups are formed in such a manner that different station groups are disjunctive.

5. The method as claimed in one of claims 1 to 4,
   in which the load pools are formed in such a manner that the stations can be essentially homogeneously utilized by means of a suitable choice of routing weights between the stations of the load pool.

6. The method as claimed in one of claims 1 to 5,
   in which a load distribution for the load pools is determined on the basis of load minimization and load homogenization in such a manner that the prioritization between load minimization and load homogenization is predetermined by means of a weighting.

7. The method as claimed in claim 6,
   in which the weighting is predetermined in such a manner that the load homogenization receives a higher priority than the load minimization.

8. The method as claimed in one of claims 1 to 7,
   in which during the determination of the load distribution, routings between stations for dispatching the physical objects to the stations are determined.

9. The method as claimed in claim 8,

in which, furthermore, weighted routings are determined.

10. The method as claimed in one of claims 1 to 9,
in which the determining of the load distribution of the load pools is carried out by using the

- primal dual method for convex quadratic programming;
- primal affine scaling method for convex quadratic programming; or
- active set method for convex quadratic programming.

11. The method as claimed in one of claims 1 to 10,
in which the physical objects are distributed to the stations of the load pools in accordance with the load distribution.

12. The method as claimed in claim 11,
in which the physical objects are distributed to a subsequent load pool by taking into consideration at least one load pool preceding the subsequent load pool.

13. The method as claimed in claim 12,
in which the physical objects are distributed to the subsequent load pool by using the critical ratio criterion.

14. The method as claimed in claim 12 or 13,
in which the distributing of the physical objects to the subsequent load pool is interrupted if the number of the physical objects distributed to this load pool exceeds a first threshold value.

15. The method as claimed in claim 14,
in which the distributing of the physical objects to the subsequent load pool is continued if the number of the physical objects distributed to this load pool drops below a second threshold value.

16. The method as claimed in one of claims 1 to 15,
in which a distribution of physical objects to the stations which has been determined is verified by means of a simulation.

17. The method as claimed in one of claims 1 to 16,
in which during the distributing of the physical objects to the stations of the system of stations, a sequence of processing the physical objects is controlled.

18. The method as claimed in one of claims 1 to 17,
in which the distribution of the physical objects to the stations of the system of stations occurs on the basis of a processing time of the physical objects.

19. The method as claimed in one of claims 1 to 18,
in which the system of stations is a system of semiconductor processing stations.

20. The method as claimed in one of claims 1 to 19,
in which the physical object is a wafer or a wafer batch with a plurality of wafers.

21. A device for determining a distribution of physical objects to stations of a system of stations with a plurality of stations, comprising a processor which is set up in such a manner that the following method steps can be performed:

- the stations are grouped to form a plurality of station groups on the basis of a respective station functionality;
- a plurality of load pools is formed, a respective load pool containing at least some of the stations of a station group;
- for the load pools, a load distribution is determined on the basis of load minimization and load homogenization, the physical objects having to be distributed to the stations of the load pools in accordance with the load distribution.

22. A computer program for determining a dispatch of physical objects to stations of a system of stations with a plurality of stations, which, when it is executed by a processor, executes the procedural steps according to claim 1.

**23.** A computer-readable storage medium, in which a computer program according to claim 22 for determining a dispatch of physical objects to stations of a system of stations with a plurality of stations is stored.

**Revendications**

**1.** Procédé de détermination d'une répartition d'objets physiques sur des installations d'un système d'installations comportant plusieurs installations, procédé dans lequel :

• en se basant sur une fonctionnalité d'installation respective, on regroupe les installations en plusieurs groupes d'installations ;
• on forme plusieurs ensembles de charge, un ensemble de charge respectif contenant au moins une partie des installations d'un groupe d'installations ;
• pour les ensembles de charge, on détermine une répartition de charge sur la base d'une minimisation de charge et d'une homogénéisation de charge, les objets physiques étant à répartir sur les installations des ensembles de charge selon la répartition de charge.

**2.** Procédé selon la revendication 1,
dans lequel le regroupement des installations en plusieurs groupes d'installations est effectué en tenant compte des possibilités des relations de la répartition des objets physiques sur les installations.

**3.** Procédé selon la revendication 1 ou 2,
dans lequel le regroupement des installations en plusieurs groupes d'installations est effectué en formant une enveloppe transitive des installations par rapport à une ou plusieurs classes de tâches, une classe de tâches correspondant à une section de processus du traitement d'un objet physique.

**4.** Procédé selon l'une des revendications 1 à 3,
dans lequel les groupes d'installations sont formés de telle sorte que des groupes d'installations différents sont disjoints.

**5.** Procédé selon l'une des revendications 1 à 4,
dans lequel les ensembles de charge sont formés de telle sorte que, au moyen d'un choix approprié de poids de branchement entre les installations de l'ensemble de charge, les installations peuvent être soumises à une charge globalement homogène.

**6.** Procédé selon l'une des revendications 1 à 5,
dans lequel, pour les ensembles de charge, une répartition de charge est déterminée sur la base d'une minimisation de charge et d'une homogénéisation de charge de telle sorte que le degré de priorité entre minimisation de charge et homogénéisation de charge est prescrit au moyen d'une pondération.

**7.** Procédé selon la revendication 6,
dans lequel la pondération est prescrite de telle sorte que l'homogénéisation de charge reçoit une plus grande priorité que la minimisation de charge.

**8.** Procédé selon l'une des revendications 1 à 7,
dans lequel, lors de la détermination de la répartition de charge, des branchements entre installations sont déterminés pour la répartition des objets physiques sur les installations.

**9.** Procédé selon la revendication 8,
dans lequel des branchements pondérés sont déterminés en plus.

**10.** Procédé selon l'une des revendications 1 à 9,
dans lequel la détermination de la répartition de charge des ensembles de charge est effectuée en utilisant l'une des méthodes suivantes :

• Primal Dual Method for Convex Quadratic Programming ;
• Primal Affine Scaling Method for Convex Quadratic Programming ; ou
• Active Set Method for Convex Quadratic Programming.

**EP 1 567 921 B1**

11. Procédé selon l'une des revendications 1 à 10,
dans lequel les objets physiques sont répartis selon la répartition de charge sur les installations des ensembles de charge.

12. Procédé selon la revendication 11,
dans lequel les objets physiques sont répartis sur un ensemble de charge placé du côté aval en tenant compte d'au moins un ensemble de charge placé du côté amont de l'ensemble de charge placé du côté aval.

13. Procédé selon la revendication 12,
dans lequel les objets physiques sont répartis sur l'ensemble de charge placé du côté aval en utilisant le critère du taux critique.

14. Procédé selon la revendication 12 ou 13,
dans lequel la répartition des objets physiques sur l'ensemble de charge placé du côté aval est interrompue lorsque le nombre des objets physiques répartis sur cet ensemble de charge devient supérieur à une première valeur de seuil.

15. Procédé selon la revendication 14,
dans lequel la répartition des objets physiques sur l'ensemble de charge placé du côté aval se poursuit lorsque le nombre des objets physiques répartis sur cet ensemble de charge devient inférieur à une deuxième valeur de seuil.

16. Procédé selon l'une des revendications 1 à 15,
dans lequel une répartition déterminée d'objets physiques sur les installations est vérifiée au moyen d'une simulation.

17. Procédé selon l'une des revendications 1 à 16,
dans lequel, lors de la répartition des objets physiques sur les installations du système d'installations, un ordre de traitement des objets physiques est commandé.

18. Procédé selon l'une des revendications 1 à 17,
dans lequel la répartition des objets physiques sur les installations du système d'installations s'effectue en se basant sur un temps de traitement des objets physiques.

19. Procédé selon l'une des revendications 1 à 18,
dans lequel le système d'installations est un système d'installations de traitement de semi-conducteurs.

20. Procédé selon l'une des revendications 1 à 19,
dans lequel l'objet physique est une tranche de semi-conducteur ou un lot de tranches de semi-conducteur avec plusieurs tranches de semi-conducteur.

21. Dispositif pour la détermination d'une répartition d'objets physiques sur des installations d'un système d'installations comportant plusieurs installations, avec un processeur qui est conçu de telle sorte que les étapes de procédé suivantes sont mises en oeuvre :

   • en se basant sur une fonctionnalité d'installation respective, les installations sont regroupées en plusieurs groupes d'installations ;
   • plusieurs ensembles de charge sont formés, un ensemble de charge respectif contenant au moins une partie des installations d'un groupe d'installations ;
   • pour les ensembles de charge, une répartition de charge est déterminée sur la base d'une minimisation de charge et d'une homogénéisation de charge, les objets physiques étant à répartir sur les installations des ensembles de charge selon la répartition de charge.

22. Programme informatique pour la détermination d'une répartition d'objets physiques sur des installations d'un système d'installations comportant plusieurs installations, lequel programme informatique met en oeuvre les étapes de procédé selon la revendication 1 lorsqu'il est exécuté par un processeur.

23. Support de mémoire lisible par ordinateur, dans lequel est mémorisé un programme informatique pour la détermination d'une répartition d'objets physiques sur des installations d'un système d'installations comportant plusieurs installations selon la revendication 22.

**24**

## FIG 1A

100

111
106
101
104
107
108
$\vec{\lambda}$
102
109
110
105
103

## FIG 1B

120
126
127
128
131
132
133
130
136
137
142
123
121
143
144
122
124
129
125
145

# FIG 1C

152 — Loop

150

154 — Aktivierung Dispatcher bei Ankunft eines Auftrags bzw. Bedienende

156 — Sind mehrere Anlagen frei?

Ja

Nein

158 — Bestimme die eindeutige Auftragsklasse

162 — Wähle für die freie Anlage die Auftragsklasse nach PPS aus; Rotiere in PPJ die Liste für die gewählte Auftragsklasse bis zur betrachteten Anlage

160 — Wähle die Anlage zur Bearbeitung gemäß PPJ aus; Rotiere in PPS die Liste für die gewählte Anlage bis zur betrachteten Auftragsklasse

164 — Ende Loop

## FIG 1D

170

172 — | Empfange Eingabe-Daten |

174 — | Bilde abgeschlossene Anlagengruppen |

176 — | Bilde Lastverbunde mittels Ermittelns einer Lastverteilung basierend auf Lastminimierung, Lasthomogenisierung |

178 — | Ermittle Pufferkapazitäten |

180 — | Verteile Wafer auf Anlagen |

## FIG 2A

200

```
C5PR: N4
       ↓      } 201
      08
       ↓
      09
       ↓
      A3      ⋮
       ↓
      F3      N4
       ↓       ↑
      P1      N4
       ↓       ↑
      I1      06
       ↓       ↑
     N13      N4
       ↓       ↑
      N4      I1
       ↓       ↑
     P13 → N4
```

## FIG 2B

250

```
C5OP: N4
        ↓
251 = 08
        ↓
       03          P13 → N4
        ↓            ↑     ↓
       A2           N4     ⋮
        ↓            ↑
       09           04
        ↓            ↑
       A3           N4
        ↓            ↑
       F3          N13
        ↓            ↑
      P12          P15
        ↓            ↑
      N13          P13
        ↓            ↑
        ↓ → F1
```

# FIG 3

300

302

|  | 509-118 | 509-136 | 509-137 | 509-143 | 509-158 | 509-164 | 509-173 | 509-174 | 509-208 |
|---|---|---|---|---|---|---|---|---|---|
| B62006 → | 1 | 1 | 1 | 1 | 1 | 0 | 0 | 0 | 0 |
| B62001 → | 1 | 1 | 1 | 1 | 0 | 0 | 0 | 0 | 0 |
| B62017 → | 1 | 1 | 0 | 0 | 0 | 1 | 0 | 1 | 0 |
| B62004 → | 1 | 0 | 0 | 1 | 1 | 0 | 1 | 1 | 1 |
| B62007 → | 1 | 0 | 0 | 1 | 1 | 0 | 0 | 1 | 1 |
| B62021 → | 0 | 1 | 0 | 0 | 1 | 1 | 1 | 0 | 0 |
| B62023 → | 0 | 1 | 0 | 0 | 1 | 1 | 1 | 0 | 0 |
| B62024 → | 0 | 1 | 0 | 0 | 1 | 0 | 1 | 0 | 0 |
| B62016 → | 0 | 0 | 1 | 1 | 0 | 0 | 0 | 0 | 0 |
| B62014 → | 0 | 0 | 0 | 1 | 0 | 0 | 0 | 1 | 1 |
| B62026 → | 0 | 0 | 0 | 0 | 1 | 1 | 0 | 0 | 0 |
| B62015 → | 0 | 0 | 0 | 0 | 0 | 0 | 0 | 0 | 1 |

301

EP 1 567 921 B1

# FIG 4

$(I_k, i) \rightarrow (I_k+1, i)$

$(I_k+1, i)$    **415**    $(I_k+1, i)$

401 402 403 404 405 406 407

        **400**

408 → $I_1$
409 → $I_2$
410 → $I_3$
411 → $I_4$
412 → $I_5$

$$
\begin{bmatrix}
0 & 1 & 0 & 1 & 1 & 0 & 1 \\
1 & 1 & 0 & 0 & 0 & 0 & 0 \\
0 & 0 & 0 & 1 & 1 & 1 & 1 \\
1 & 0 & 1 & 0 & 1 & 1 & 1 \\
1 & 1 & 1 & 0 & 1 & 0 & 0
\end{bmatrix}
$$

414 →     $(I_1, i)$     $(I_2, i)$ →

413 →     $(I_1-1, i) \rightarrow (I_1, i) \rightarrow (I_1+1, i) \rightarrow \ldots \rightarrow (I_2-1, i) \rightarrow (I_2, i) \rightarrow (I_2+1, i) \rightarrow \ldots \rightarrow$

## FIG 5

U

502

100%

$\overline{U}$

503

503

500

501

A1    A2    A3    . . . .    An

## FIG 6

600

609

U=40%

LV3    η=2.175

603

607

U=87%

LV1

601

S=5

S=11

610

U=75%

LV4    η=1.16

604

S=13

611

U=82%

LV5    $\eta_{LV1}$=1.061
$\eta_{LV2}$=0.829

605

608

U=68%

LV2

602

S-8

S=5

612

U=63%

LV6    η=1.079

606

## FIG 7

700

| m=28 | 1. B87005 | 2. B89202 | 3. B89203 | 4. B89206 |
|---|---|---|---|---|
| | 5. B89205 | 6. B87033 | 7. B89122 | 8. B89124 |
| | 9. B89125 | 10. B89123 | 11. B89112 | 12. B89114 |
| | 13. B87009 | 14. B87013 | 15. B87018 | 16. B87019 |
| | 17. B87004 | 18. B87008 | 19. B89217 | 20. B89218 |
| | 21. B89209 | 22. B89210 | 23. B89212 | 24. B89213 |
| | 25. B87016 | 26. B87007 | 27. B87015 | 28. B87006 |

701

| n=13 | 1. 511-115 | 2. 511-116 | 3. 511-121 | 4. 511-122 |
|---|---|---|---|---|
| | 5. 511-123 | 6. 511-124 | 7. 511-125 | 8. 511-126 |
| | 9. 511-127 | 10. 511-128 | 11. 511-129 | 12. 511-130 |
| | 13. 511-131 | | | |

702

$$\lambda = 2.5 \cdot (2.738, 2.271, 6.591, 12.858, 11.253, 0.894, 2.271, 1.321, 3.074, 0.654,$$
$$4.542, 0.378, 1.779, 2.846, 3.287, 1.779, 3.816, 2.104, 0.894, 6.361,$$
$$1.466, 1.466, 2.271, 11.908, 4.542, 11.908, 0.378, 0.378)^T$$

## FIG 8

800

$$
B = \begin{pmatrix}
0 & 0 & 201 & 268 & 201 & 0 & 0 & 0 & 0 & 0 & 0 & 268 & 201 \\
0 & 0 & 0 & 0 & 0 & 0 & 0 & 197 & 0 & 0 & 0 & 0 & 0 \\
162 & 162 & 162 & 269 & 162 & 0 & 162 & 0 & 162 & 269 & 269 & 269 & 162 \\
132 & 132 & 132 & 264 & 132 & 0 & 132 & 0 & 132 & 0 & 0 & 264 & 132 \\
0 & 0 & 207 & 276 & 207 & 0 & 0 & 0 & 0 & 0 & 0 & 276 & 207 \\
0 & 0 & 152 & 217 & 0 & 0 & 0 & 0 & 0 & 0 & 0 & 0 & 0 \\
0 & 0 & 129 & 129 & 129 & 0 & 0 & 0 & 0 & 0 & 0 & 0 & 129 \\
200 & 200 & 200 & 400 & 200 & 0 & 200 & 0 & 200 & 400 & 400 & 400 & 200 \\
206 & 206 & 206 & 412 & 206 & 0 & 206 & 0 & 206 & 0 & 0 & 412 & 0 \\
0 & 0 & 201 & 201 & 201 & 0 & 0 & 0 & 0 & 0 & 0 & 201 & 0 \\
0 & 0 & 207 & 207 & 207 & 0 & 0 & 0 & 0 & 0 & 0 & 207 & 0 \\
0 & 0 & 0 & 0 & 0 & 0 & 173 & 0 & 173 & 173 & 173 & 0 & 0 \\
0 & 0 & 0 & 0 & 0 & 144 & 187 & 187 & 187 & 0 & 187 & 187 & 0 \\
0 & 0 & 0 & 0 & 0 & 162 & 162 & 162 & 162 & 0 & 162 & 162 & 0 \\
0 & 0 & 0 & 0 & 0 & 188 & 0 & 188 & 0 & 0 & 0 & 188 & 0 \\
0 & 0 & 0 & 0 & 0 & 240 & 0 & 324 & 0 & 0 & 0 & 324 & 0 \\
0 & 0 & 0 & 0 & 0 & 198 & 0 & 257 & 0 & 0 & 0 & 257 & 0 \\
0 & 0 & 0 & 0 & 0 & 188 & 0 & 188 & 0 & 0 & 0 & 188 & 0 \\
0 & 0 & 0 & 0 & 0 & 0 & 190 & 0 & 228 & 0 & 228 & 0 & 0 \\
0 & 0 & 0 & 0 & 0 & 0 & 171 & 0 & 171 & 0 & 171 & 171 & 0 \\
0 & 0 & 0 & 0 & 0 & 0 & 163 & 0 & 228 & 0 & 228 & 228 & 0 \\
0 & 0 & 0 & 0 & 0 & 0 & 176 & 0 & 228 & 0 & 228 & 228 & 0 \\
212 & 212 & 0 & 0 & 0 & 0 & 0 & 0 & 0 & 0 & 0 & 0 & 212 \\
212 & 212 & 0 & 0 & 0 & 0 & 0 & 0 & 0 & 0 & 0 & 0 & 212 \\
211 & 211 & 0 & 0 & 0 & 0 & 0 & 0 & 0 & 0 & 0 & 0 & 211 \\
211 & 211 & 0 & 0 & 0 & 0 & 0 & 0 & 0 & 0 & 0 & 0 & 211 \\
212 & 212 & 0 & 0 & 0 & 0 & 0 & 0 & 0 & 0 & 0 & 0 & 0 \\
211 & 211 & 0 & 0 & 0 & 0 & 0 & 0 & 0 & 0 & 0 & 0 & 0
\end{pmatrix}
$$

## FIG 9

900

$$
P = \begin{bmatrix}
0. & 0. & 45.4 & 4.2 & 46.7 & 0. & 0. & 0. & 0. & 0. & 0. & 3.7 & 0. \\
0. & 0. & 0. & 0. & 0. & 0. & 0. & 100. & 0. & 0. & 0. & 0. & 0. \\
0. & 0. & 2.3 & 0. & 2.3 & 0. & 18.6 & 0. & 19.4 & 57.4 & 0. & 0. & 0. \\
0. & 0. & 1.5 & 0. & 1.5 & 0. & 42.6 & 0. & 54.3 & 0. & 0. & 0. & 0. \\
0. & 0. & 46.3 & 1. & 51.8 & 0. & 0. & 0. & 0. & 0. & 0. & 0.9 & 0. \\
0. & 0. & 99.9 & 0.1 & 0. & 0. & 0. & 0. & 0. & 0. & 0. & 0. & 0. \\
0. & 0. & 0. & 100. & 0. & 0. & 0. & 0. & 0. & 0. & 0. & 0. & 0. \\
0. & 0. & 6.6 & 0. & 6.6 & 0. & 42.9 & 0. & 44. & 0. & 0. & 0. & 0. \\
0. & 0. & 3.6 & 0. & 3.6 & 0. & 44.2 & 0. & 48.6 & 0. & 0. & 0. & 0. \\
0. & 0. & 0. & 61.5 & 0. & 0. & 0. & 0. & 0. & 0. & 0. & 38.5 & 0. \\
0. & 0. & 0. & 87.4 & 0. & 0. & 0. & 0. & 0. & 0. & 0. & 12.6 & 0. \\
0. & 0. & 0. & 0. & 0. & 0. & 0. & 0. & 0. & 99.9 & 0.1 & 0. & 0. \\
0. & 0. & 0. & 0. & 0. & 99.8 & 0. & 0. & 0. & 0. & 0. & 0.1 & 0. \\
0. & 0. & 0. & 0. & 0. & 0. & 0. & 38.8 & 0. & 0. & 33.4 & 27.8 & 0. \\
0. & 0. & 0. & 0. & 0. & 0. & 0. & 63.9 & 0. & 0. & 0. & 36.1 & 0. \\
0. & 0. & 0. & 0. & 0. & 100. & 0. & 0. & 0. & 0. & 0. & 0. & 0. \\
0. & 0. & 0. & 0. & 0. & 100. & 0. & 0. & 0. & 0. & 0. & 0. & 0. \\
0. & 0. & 0. & 0. & 0. & 0. & 0. & 59.9 & 0. & 0. & 0. & 40.1 & 0. \\
0. & 0. & 0. & 0. & 0. & 0. & 0. & 0. & 0. & 0. & 100. & 0. & 0. \\
0. & 0. & 0. & 0. & 0. & 0. & 0. & 0. & 0. & 0. & 66.9 & 33.1 & 0. \\
0. & 0. & 0. & 0. & 0. & 0. & 99.8 & 0. & 0. & 0. & 0.1 & 0.1 & 0. \\
0. & 0. & 0. & 0. & 0. & 0. & 0.1 & 0. & 0. & 0. & 51.4 & 48.6 & 0. \\
33.2 & 33.2 & 0. & 0. & 0. & 0. & 0. & 0. & 0. & 0. & 0. & 0. & 33.5 \\
32.8 & 32.8 & 0. & 0. & 0. & 0. & 0. & 0. & 0. & 0. & 0. & 0. & 34.3 \\
33.1 & 33.1 & 0. & 0. & 0. & 0. & 0. & 0. & 0. & 0. & 0. & 0. & 33.7 \\
32.8 & 32.8 & 0. & 0. & 0. & 0. & 0. & 0. & 0. & 0. & 0. & 0. & 34.3 \\
50. & 50. & 0. & 0. & 0. & 0. & 0. & 0. & 0. & 0. & 0. & 0. & 0. \\
50. & 50. & 0. & 0. & 0. & 0. & 0. & 0. & 0. & 0. & 0. & 0. & 0.
\end{bmatrix}
$$

## FIG 10

1000

$$
U = \begin{pmatrix}
0. & 0. & 10.4 & 1.3 & 10.7 & 0. & 0. & 0. & 0. & 0. & 0. & 1.1 & 0. \\
0. & 0. & 0. & 0. & 0. & 0. & 0. & 18.6 & 0. & 0. & 0. & 0. & 0. \\
0. & 0. & 1. & 0. & 1. & 0. & 8.3 & 0. & 8.6 & 42.4 & 0. & 0. & 0. \\
0. & 0. & 1.1 & 0. & 1.1 & 0. & 30.1 & 0. & 38.4 & 0. & 0. & 0. & 0. \\
0. & 0. & 44.9 & 1.3 & 50.3 & 0. & 0. & 0. & 0. & 0. & 0. & 1.2 & 0. \\
0. & 0. & 5.7 & 0. & 0. & 0. & 0. & 0. & 0. & 0. & 0. & 0. & 0. \\
0. & 0. & 0. & 12.2 & 0. & 0. & 0. & 0. & 0. & 0. & 0. & 0. & 0. \\
0. & 0. & 0.7 & 0. & 0.7 & 0. & 4.7 & 0. & 4.8 & 0. & 0. & 0. & 0. \\
0. & 0. & 0.9 & 0. & 0.9 & 0. & 11.7 & 0. & 12.8 & 0. & 0. & 0. & 0. \\
0. & 0. & 0. & 3.4 & 0. & 0. & 0. & 0. & 0. & 0. & 0. & 2.1 & 0. \\
0. & 0. & 0. & 34.2 & 0. & 0. & 0. & 0. & 0. & 0. & 0. & 4.9 & 0. \\
0. & 0. & 0. & 0. & 0. & 0. & 0. & 0. & 0. & 2.7 & 0. & 0. & 0. \\
0. & 0. & 0. & 0. & 0. & 10.7 & 0. & 0. & 0. & 0. & 0. & 0. & 0. \\
0. & 0. & 0. & 0. & 0. & 0. & 0. & 7.4 & 0. & 0. & 6.4 & 5.3 & 0. \\
0. & 0. & 0. & 0. & 0. & 0. & 0. & 16.4 & 0. & 0. & 0. & 9.3 & 0. \\
0. & 0. & 0. & 0. & 0. & 17.8 & 0. & 0. & 0. & 0. & 0. & 0. & 0. \\
0. & 0. & 0. & 0. & 0. & 31.5 & 0. & 0. & 0. & 0. & 0. & 0. & 0. \\
0. & 0. & 0. & 0. & 0. & 0. & 0. & 9.9 & 0. & 0. & 0. & 6.6 & 0. \\
0. & 0. & 0. & 0. & 0. & 0. & 0. & 0. & 0. & 0. & 8.5 & 0. & 0. \\
0. & 0. & 0. & 0. & 0. & 0. & 0. & 0. & 0. & 0. & 30.3 & 15. & 0. \\
0. & 0. & 0. & 0. & 0. & 0. & 9.9 & 0. & 0. & 0. & 0. & 0. & 0. \\
0. & 0. & 0. & 0. & 0. & 0. & 0. & 0. & 0. & 0. & 7.2 & 6.8 & 0. \\
6.7 & 6.7 & 0. & 0. & 0. & 0. & 0. & 0. & 0. & 0. & 0. & 0. & 6.7 \\
34.5 & 34.5 & 0. & 0. & 0. & 0. & 0. & 0. & 0. & 0. & 0. & 0. & 36.1 \\
13.2 & 13.2 & 0. & 0. & 0. & 0. & 0. & 0. & 0. & 0. & 0. & 0. & 13.5 \\
34.4 & 34.4 & 0. & 0. & 0. & 0. & 0. & 0. & 0. & 0. & 0. & 0. & 35.9 \\
1.7 & 1.7 & 0. & 0. & 0. & 0. & 0. & 0. & 0. & 0. & 0. & 0. & 0. \\
1.7 & 1.7 & 0. & 0. & 0. & 0. & 0. & 0. & 0. & 0. & 0. & 0. & 0.
\end{pmatrix}
$$

1001

$$\vec{U} = (92.2, 92.2, 64.7, 52.4, 64.7, 59.9, 64.7, 52.4, 64.7, 45.1, 52.4, 52.4, 92.2)T$$

## FIG 11

1100

$$
R = \begin{pmatrix}
0. & 0. & 15.8 & 1.7 & 16.7 & 0. & 0. & 0. & 0. & 0. & 0. & 1.5 & 0. \\
0. & 0. & 0. & 0. & 0. & 0. & 0. & 33.7 & 0. & 0. & 0. & 0. & 0. \\
0. & 0. & 1.9 & 0. & 2. & 0. & 12.1 & 0. & 12.4 & 90.9 & 0. & 0. & 0. \\
0. & 0. & 2.5 & 0. & 2.6 & 0. & 54.3 & 0. & 67.5 & 0. & 0. & 0. & 0. \\
0. & 0. & 66. & 1.7 & 76.2 & 0. & 0. & 0. & 0. & 0. & 0. & 1.6 & 0. \\
0. & 0. & 11.3 & 0. & 0. & 0. & 0. & 0. & 0. & 0. & 0. & 0. & 0. \\
0. & 0. & 0. & 33. & 0. & 0. & 0. & 0. & 0. & 0. & 0. & 0. & 0. \\
0. & 0. & 1.1 & 0. & 1.1 & 0. & 5.6 & 0. & 5.6 & 0. & 0. & 0. & 0. \\
0. & 0. & 1.4 & 0. & 1.4 & 0. & 13.5 & 0. & 14.5 & 0. & 0. & 0. & 0. \\
0. & 0. & 0. & 5.9 & 0. & 0. & 0. & 0. & 0. & 0. & 0. & 3.8 & 0. \\
0. & 0. & 0. & 57.7 & 0. & 0. & 0. & 0. & 0. & 0. & 0. & 8.6 & 0. \\
0. & 0. & 0. & 0. & 0. & 0. & 0. & 0. & 0. & 9.1 & 0. & 0. & 0. \\
0. & 0. & 0. & 0. & 0. & 24.1 & 0. & 0. & 0. & 0. & 0. & 0. & 0. \\
0. & 0. & 0. & 0. & 0. & 0. & 0. & 16.4 & 0. & 0. & 13.9 & 11.8 & 0. \\
0. & 0. & 0. & 0. & 0. & 0. & 0. & 31.2 & 0. & 0. & 0. & 17.8 & 0. \\
0. & 0. & 0. & 0. & 0. & 24.1 & 0. & 0. & 0. & 0. & 0. & 0. & 0. \\
0. & 0. & 0. & 0. & 0. & 51.8 & 0. & 0. & 0. & 0. & 0. & 0. & 0. \\
0. & 0. & 0. & 0. & 0. & 0. & 0. & 18.7 & 0. & 0. & 0. & 12.6 & 0. \\
0. & 0. & 0. & 0. & 0. & 0. & 0. & 0. & 0. & 0. & 13. & 0. & 0. \\
0. & 0. & 0. & 0. & 0. & 0. & 0. & 0. & 0. & 0. & 62.1 & 31.5 & 0. \\
0. & 0. & 0. & 0. & 0. & 0. & 14.5 & 0. & 0. & 0. & 0. & 0. & 0. \\
0. & 0. & 0. & 0. & 0. & 0. & 0. & 0. & 0. & 0. & 11. & 10.7 & 0. \\
7.2 & 7.2 & 0. & 0. & 0. & 0. & 0. & 0. & 0. & 0. & 0. & 0. & 7.3 \\
37.4 & 37.4 & 0. & 0. & 0. & 0. & 0. & 0. & 0. & 0. & 0. & 0. & 39. \\
14.4 & 14.4 & 0. & 0. & 0. & 0. & 0. & 0. & 0. & 0. & 0. & 0. & 14.6 \\
37.4 & 37.4 & 0. & 0. & 0. & 0. & 0. & 0. & 0. & 0. & 0. & 0. & 39. \\
1.8 & 1.8 & 0. & 0. & 0. & 0. & 0. & 0. & 0. & 0. & 0. & 0. & 0. \\
1.8 & 1.8 & 0. & 0. & 0. & 0. & 0. & 0. & 0. & 0. & 0. & 0. & 0.
\end{pmatrix}
$$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4024307 A1

### In der Beschreibung aufgeführte Nicht-Patentliteratur

- **PALMERI, V et al.** An Analysis of the 'K-Step Ahead' Minimum Inventory Variability Policy® Using SEMATECH Semiconductor Manufacturing Data in a Discrete-Event Simulation Model. *Proceedings of the IEEE 6th International Conference on Emerging Technologie and Factory Automation (EFTA,* 1997, 520-527
- **LI, S et al.** Minimum Inventory Variability Schedule With Applications in Semiconductor Fabrication. *IEEE Transactions on Semiconductor Manufacturing,* 1996, vol. 9 (1), 1-5
- **ASHGAR BHATTI, M.** Practical Optimization Methods. Springer Verlag, 2000, 495-498502-510520-524535-539
- **KREKÓ, B.** Optimierung - Nichtlineare Modelle. VEB Deutscher Verlag der Wissenschaften, 1974
- **BOXMA, OJ et al.** Efficient visit frequencies for polling tables: minimization of waiting cost. *Queueing Systems,* 1991, vol. 9, 133-162
- Optimization of polling systems. **BOXMA, OJ et al.** Performance '90. 1990, 349-361
- Performance Analysis of a Batch Service System. **GOLD, H et al.** The Fundamental Role of Teletraffic in the Evolution of Telecommunications Networks. Elsevier, 1994, vol. I, 155-168
- **KELLY, FP et al.** Dynamic Routing in open queueing networks: Brownian models, cut constraints and ressource pooling. *Queueing Systems,* 1993, vol. 13, 47-86